# EUROPEAN PATENT APPLICATION

(11) **EP 4 672 813 A1**
(43) Date of publication of application: **31.12.2025**
(21) Application number: 24763575.8
(22) Date of filing: 09.02.2024
(51) Int. Cl.: H04W 28/24, H04W 24/02

(54) **COMMUNICATION DEVICE, INFORMATION PROCESSING DEVICE, COMMUNICATION METHOD, AND INFORMATION PROCESSING METHOD**

(30) Priority: 01.03.2023 JP 2023031329
(71) Applicant: Sony Group Corporation, Tokyo 108-0075 (JP)
(72) Inventor: ASAKURA, Kenta, Tokyo 108-0075 (JP); GOTO, Jungo, Tokyo 108-0075 (JP); HORITA, Koki, Tokyo 108-0075 (JP)
(74) Representative: D Young & Co LLP
(86) International application number: PCT/JP2024/004485
(87) International publication number: WO 2024/181091

(57) **Abstract**

A communication apparatus that functions as a user apparatus in a mobile network including a core network includes: a communication control unit configured to establish a session in an application layer with an information processing apparatus capable of controlling the mobile network via a function of the core network; an acquisition unit configured to acquire quality information related to communication using the mobile network, from the information processing apparatus in the session; a decision unit that decides Quality of Service (QoS) regarding a service desired to be used by the communication apparatus, based on the quality information acquired and information related to the service desired to be used by the communication apparatus; and a transmission unit configured to transmit a request for the QoS to the information processing apparatus.

## Description

### Field

The present disclosure relates to a communication apparatus, an information processing apparatus, a communication method, and an information processing method.

### Background

Mobile networks such as cellular networks have been actively developed. In a mobile network, various studies have been made to further improve communication performance. For example, there have been studies, in 5G, to enable a quality assurance type communication service instead of the best effort type service.

### Citation List

### Patent Literature

Patent Literature 1: JP 2022-128930 A

### Summary

### Technical Problem

However, it is difficult, only with the conventional technology, to realize high communication performance (for example, implementation of a quality assurance type communication service). For example, in the conventional technology, quality of service (QoS) control is performed in a network such as a core network. However, information such as an uplink data communication volume and a QoS requirement of an application is possessed by a terminal apparatus connected to a network. This makes it difficult for a single network to perform optimal control for realizing a quality assurance type communication service.

In view of this, the present disclosure proposes a communication apparatus, an information processing apparatus a communication method, and an information processing method capable of achieving high communication performance.

Note that the above problem or target is merely one of a plurality of problems or targets that can be solved or achieved by a plurality of embodiments disclosed in the present specification.

### Solution to Problem

In order to solve the above problem, a communication apparatus according to one embodiment of the present disclosure that functions as a user apparatus in a mobile network including a core network, the communication apparatus comprising: a communication control unit configured to establish a session in an application layer with an information processing apparatus capable of controlling the mobile network via a function of the core network; an acquisition unit configured to acquire quality information related to communication using the mobile network, from the information processing apparatus in the session; a decision unit configured to decide Quality of Service (QoS) regarding a service desired to be used by the communication apparatus, based on the quality information acquired and information related to the service; and a transmission unit configured to transmit a request for the QoS to the information processing apparatus.

### Brief Description of Drawings

FIG. 1 is a diagram illustrating outline of the present embodiment.
FIG. 2 is a diagram illustrating a configuration of a communication system according to the present embodiment.
FIG. 3 is a diagram illustrating a configuration example of a server according to an embodiment of the present disclosure.
FIG. 4 is a diagram illustrating a configuration of a management apparatus according to the present embodiment.
FIG. 5 is a diagram illustrating a configuration of a base station according to the present embodiment.
FIG. 6 is a diagram illustrating a configuration of a terminal apparatus according to the present embodiment.
FIG. 7 is a diagram illustrating an example of 5G architecture.
FIG. 8 is a diagram illustrating an example of QCI.
FIG. 9 is a diagram illustrating an example of 5QI.
FIG. 10 is a sequence diagram illustrating network quality information disclosure processing and predictor update processing.
FIG. 11 is a sequence diagram illustrating QoS setting processing.
FIG. 12 is a diagram for illustrating operation of the communication system according to a first modification.
FIG. 13 is a diagram for illustrating the operation of the communication system according to a second modification.
FIG. 14 is a diagram for illustrating the operation of the communication system according to a third modification.

### Description of Embodiments

Embodiments of the present disclosure will be described below in detail with reference to the drawings. Note that, in each of the following embodiments, the same parts are denoted by the same reference symbols, and a repetitive description thereof will be omitted.

Moreover, in the present specification and the drawings, a plurality of components having substantially the same functional configuration will be distinguished by attaching different numbers after the same reference numerals. For example, a plurality of configurations having substantially the same functional configuration are distinguished as necessary, such as terminal apparatuses 40₁, 40₂, 40₃, and 40₄. However, when it is not particularly necessary to distinguish between the plurality of components having substantially the same functional configuration, only the same reference numeral is given. For example, in a case where it is not necessary to particularly distinguish the terminal apparatuses 40₁, 40₂, 40₃, and 40₄, they are simply denoted as the terminal apparatus 40.

One or a plurality of embodiments (including implementation examples and modifications) described below can each be implemented independently. On the other hand, at least some of the plurality of embodiments described below may be appropriately combined with at least some of other embodiments. The plurality of embodiments may include novel features different from each other. Accordingly, the plurality of embodiments can contribute to achieving or solving different objects or problems, and can exhibit different effects.

### <<1. Overview>>

Mobile networks such as cellular networks have been actively developed. In a mobile network, various studies have been made to further improve communication performance. For example, there have been studies, in 5G, to enable a quality assurance type communication service instead of the best effort type service.

Since a large number of terminal apparatuses are connected to a public network, it is necessary to consider fairness among users at a rapid increase of the traffic. This leads to a case having difficulty to guarantee the quality in the public network. On the other hand, in the private network, the restriction of the number of connected terminal apparatuses, the traffic volume, and the resource allocation can be freely controlled, facilitating realization of quality assurance specialized for the service to be used.

However, not only in the use of a public network but also in the use of a private network, it is difficult, only with the conventional technology, to improve communication performance (for example, realization of quality assurance type communication service, high speed, a low latency, a high reliability, a low power consumption, or a low processing load of communication).

For example, in the conventional technology, quality of service (QoS) control is performed in a network such as a core network. However, information such as an uplink data communication volume and a QoS requirement of an application is possessed by a terminal apparatus connected to a network. This makes it difficult for a single network to perform optimal control for realizing a quality assurance type communication service.

On the other hand, it is also conceivable to enable a terminal apparatus connected to a network to perform QoS setting. However, in this case, it is assumable to receive a request exceeding the network capacity from the terminal apparatus side. In this case, there is a possibility to have lowered communication performance (for example, deterioration of the communication rate) in the entire communication system.

In view of these, the present embodiment proposes to solve the above problem as follows.

### (Outline of embodiment)

The present embodiment constructs a mobile network (for example, a cellular network such as a 5G network) that allows a request to change QoS settings from a terminal apparatus to an application function (AF). Based on information collected from the core network (for example, 5G Core), the application function creates a predictor that predicts future values regarding quality information of a mobile network (hereinafter, denoted as network quality information). Subsequently, the application function discloses the network quality information (prediction information) predicted using the predictor, to the terminal apparatus. Based on the network quality information (prediction information) disclosed by the application function and information regarding a service desired to be used, the terminal apparatus makes a QoS request to the application function.

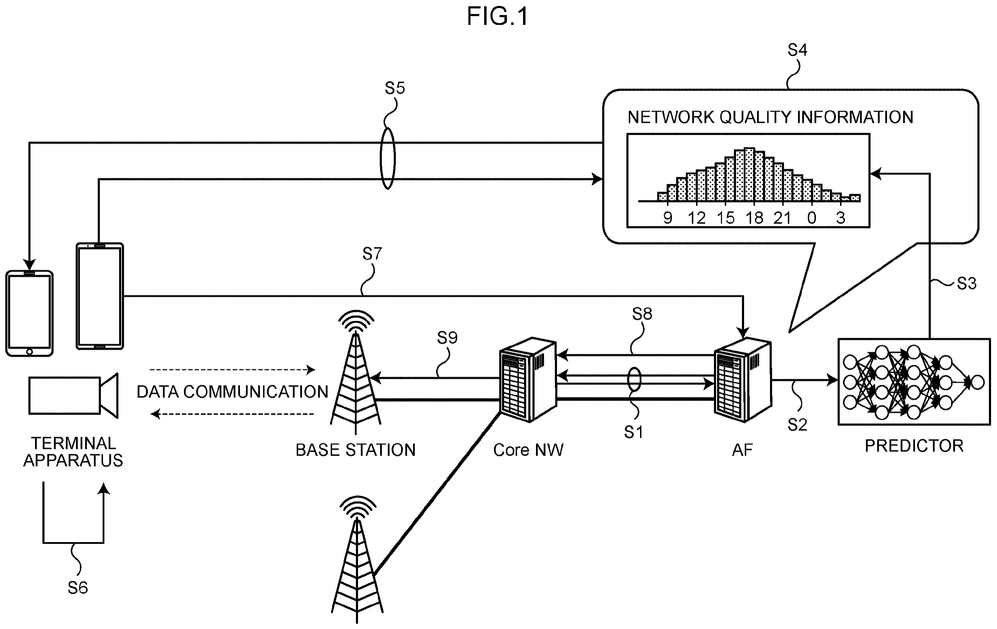

FIG. 1 is a diagram illustrating outline of the present embodiment. Hereinafter, the outline of the configuration and operation of the communication system of the present embodiment will be described with reference to FIG. 1.

### (Outline of configuration of communication system)

The communication system of the present embodiment is a system for realizing a mobile network. In the present embodiment, the mobile network is a cellular network including a core network that manages terminal apparatuses (also denoted as User Equipment (UE)). In the following description, a mobile network may be simply referred to as a network.

The communication system includes a plurality of base stations. The core network is connected to a terminal apparatus via a base station. The communication system also includes an application function. The application function may be included in the information processing apparatus constituting the core network, or may be included in an information processing apparatus different from the information processing apparatus constituting the core network. In the example of FIG. 1, the application function is included in a server apparatus connected to the core network.

### (Outline of operation of communication system)

First, the application function acquires network quality information for each base station from the core network (step S1). Subsequently, the application function creates a predictor that predicts future network quality information based on the past network quality information collected (step S2). The predictor is a learning model, for example.

The network quality information predicted by the predictor may include at least one of the following (1) to (3).
(1) Network traffic volume and/or band use rate
(2) Delay time
(3) Jitter

The network quality information predicted by the predictor may include information related to packet loss. Furthermore, the network quality information (information disclosed by AF) may include information disclosed by a Network Exposure Function (NEF) or a Network Data Analysis Function (NWDAF). For example, the network quality information may include at least one of a Mean Objective Score (MOS) of a specific application, NW mobility performance statistical/prediction information, UE related analysis information, user data congestion analysis information, and QoS sustainability analysis information.

For example, the network quality information predicted by the predictor may include at least one of the following (4) to (16) in addition to at least one of the above (1) to (3).
(4) UE location (location information regarding terminal apparatus (UE))
(5) Reachability
(6) Roaming status
(7) Loss (rate) of connectivity
(8) Base station (gNB) status information
(9) Service Experience (e.g. Mean Objective Score (MOS))
(10) Number of UEs (number of terminal apparatuses (UE))
(11) Reference Signal Received Power (RSRP)
(12) Reference Signal Received Quality (RSRQ)
(13) Signal-to-noise and interference ratio (SINR)
(14) QoS flow bit rate
(15) QoS flow Packet Delay
(16) Packet retransmission

Information of (4) to (7) described above may be the same as information provided (exposed) to another network function (NF) by NEF. In addition to or in place of this, information of (4) and (8) to (16) described above may be the same as information collected from another NF and/or provided (exposed) to another NF by the Network Data Analysis Function (NWDAF).

The prediction target of the predictor may be at least one of the following (1) to (3), or may include at least one of the following (1) to (3).
(1) When the network is a private network: quality information of the entire network
(2) When the network is a public network: quality information in units of slices assigned to a particular service
(3) When the network is a public network: quality information of the entire network

The application function predicts future network quality information for each base station as needed using the predictor (step S3). Subsequently, the application function discloses the network quality information predicted by the predictor to the terminal apparatus (step S4). For example, the application function may disclose the network quality information on the Web so that the terminal apparatus can acquire the network quality information via an application programming interface (API). The network quality information disclosed by the application function may include a current value in addition to the predicted value.

The terminal apparatus acquires network quality information of the connected base station via the API (step S5). Subsequently, based on the acquired network quality information and information of a service desired to be used, the terminal apparatus decides QoS to be requested (step S6). Subsequently, the terminal apparatus notifies the decided QoS to the application function via the mobile network (step S7). The path for sending a signal to the application function is not limited to the mobile network, and may be, for example, another Internet line (for example, a wireless local area network (wireless LAN such as Wifi, for example) and the Internet connected through the wireless LAN).

Based on QoS information requested from the terminal apparatus, the application function decides a QoS flow setting request for the core network. Subsequently, the application function transmits the QoS flow setting request to the core network (step S8).

The core network controls the base station based on the QoS flow setting (step S9). The control target of the core network is not limited to the base station parameter, and may be a network parameter other than the base station. For example, the core network may affect not only the radio parameter but also other NW parameters based on a change in a 5QI.

In this manner, in the present embodiment, the terminal apparatus issues a QoS request to the network. Therefore, the network can perform optimal network control in consideration of the needs of the terminal apparatus.

In the present embodiment, the application function discloses future network quality information to the terminal apparatus. The terminal apparatus decides the QoS request based on the future network quality information. This makes it possible to prevent the terminal apparatus from making a QoS request exceeding the capacity of the network.

The outline of the present embodiment has been described above. Hereinafter, a communication system 1 according to the present embodiment will be described in detail.

### <<2. Configuration of communication system>>

First, a configuration of the communication system 1 will be described.

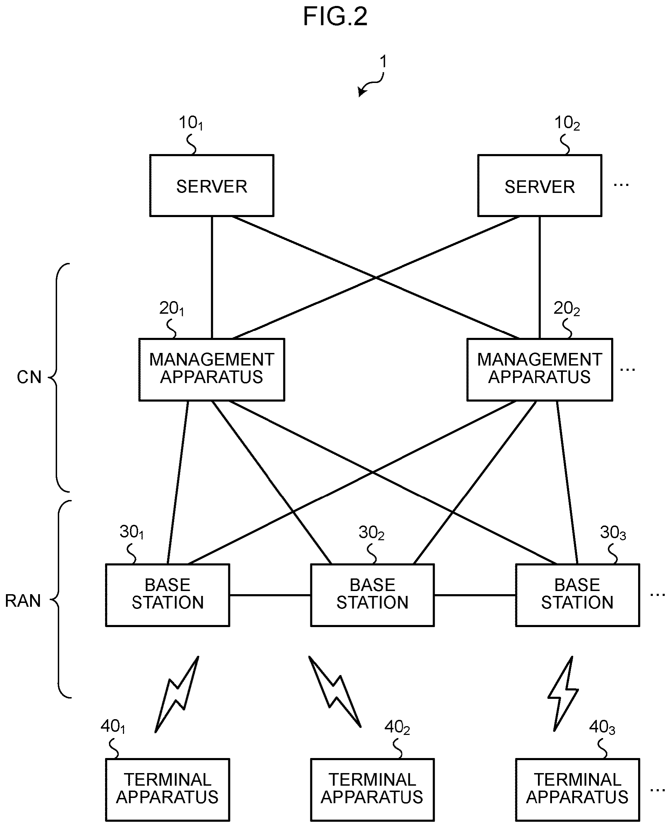

FIG. 2 is a diagram illustrating a configuration example of a communication system 1 according to the present embodiment. The communication system 1 includes a server 10, a management apparatus 20, a base station 30, and a terminal apparatus 40. With individual wireless communication apparatuses constituting the communication system 1 operating in cooperation with each other, the communication system 1 provides a user with a wireless network capable of mobile communication (mobile network). The wireless network of the present embodiment may be, for example, a cellular network including a radio access network RAN and a core network CN. The mobile network may include a terminal apparatus 40. In the present embodiment, the wireless communication apparatus is an apparatus having a wireless communication function, and in the example of FIG. 2, the apparatus corresponds to the base station 30 and the terminal apparatus 40.

The communication system 1 may include a plurality of servers 10, a plurality of management apparatuses 20, a plurality of base stations 30, and a plurality of terminal apparatuses 40. In the example of FIG. 2, the communication system 1 includes a server 10₁ and a server 10₂ as the server 10, and includes a management apparatus 20₁ and a management apparatus 20₂ as the management apparatus 20. Furthermore, the communication system 1 includes a base station 30₁, a base station 30₂, and a base station 30₃ as the base station 30, and includes a terminal apparatus 40₁, a terminal apparatus 40₂, and a terminal apparatus 40₃ as the terminal apparatus 40.

The terminal apparatus 40 may be configured to connect to the network using a Radio Access Technology (RAT) such as Long Term Evolution (LTE), New Radio (NR), 6G, Wi-Fi, or Bluetooth (registered trademark). At this time, the terminal apparatus 40 may be configured to be able to use different radio access technologies (wireless communication method). For example, the terminal apparatus 40 may be configured to be able to use NR and Wi-Fi. Furthermore, the terminal apparatus 40 may be configured to be able to use different cellular communication technologies (for example, LTE and NR, or 6G). LTE and NR are a type of cellular communication technology, and enable mobile communication of terminal apparatuses by using cellular arrangement of a plurality of areas covered by base stations. 6G is also a type of cellular communication technology, and enable mobile communication of terminal apparatuses by using cellular arrangement of a plurality of areas covered by base stations.

In the following, it is assumed that "LTE" includes LTE-advanced (LTE-A), LTE-advanced pro (LTE-A Pro), and evolved universal terrestrial radio access (EUTRA). In addition, it is assumed that NR includes new radio access technology (NRAT) and further EUTRA (FEUTRA). A single base station 30 may manage a plurality of cells. In the following, a cell corresponding to LTE may be referred to as an LTE cell, and a cell corresponding to NR may be referred to as an NR cell.

NR is the next generation (fifth generation) radio access technology subsequent to LTE (fourth generation communication including LTE-Advanced and LTE-Advanced Pro). The NR is a radio access technology that can support various use cases including enhanced mobile broadband (eMBB), massive machine type communications (mMTC), and Ultra-Reliable and Low Latency Communications (URLLC). NR is standardized by Rel-15 of 3GPP (registered trademark) as a technical framework supporting a usage scenario, a requirements, a deployment scenario, and the like in these use cases. Furthermore, Beyond 5G and 6G are required to simultaneously achieve a plurality of axes of high speed and large capacity, low latency/high reliability, and multiple simultaneous connection.

6G is a cellular communication technology of a next generation of NR or 5G system (5GS) that is the fifth generation mobile communication. 6G includes a radio access technology and a network technology between a base station, a core network, and a data network. In addition, the 6G includes a technology for sophistication (referred to as extreme connectivity) of each technology of eMBB, mMTC, and URLLC, which have been defined as a main use case or a requirement in the NR. For example, 6G can include new technologies in new aspects (for example, AI (including cognitive network, AI native Air Interface), sensing (including Rader sensing, network as a sensor), and terahertz communication. Regarding 6G, the standard specification studies will start in 3GPP from around 2025, the formulation of the initial specification will be completed in around 2028, and will possibly be commercialized in or after 2030.

The wireless network may be compatible with a radio access technology (RAT) such as long term evolution (LTE), new radio (NR) and 6G. LTE, NR, and 6G are a type of cellular communication technology, and enable mobile communication of terminal apparatuses by using cellular arrangement of a plurality of areas covered by base stations. The radio access method used by the communication system 1 is not limited to LTE, NR, or 6G, and may be other radio access methods such as wideband code division multiple access (W-CDMA) and code division multiple access 2000 (cdma2000), for example.

The base station 30 may be a terrestrial station or a non-terrestrial station. The non-terrestrial station may be a satellite station or an aircraft station. When the non-terrestrial station is a satellite station, the wireless network may be a Bent-pipe (Transparent) mobile satellite communication system.

In the present embodiment, the terrestrial station (also referred to as a terrestrial base station) refers to a base station or a relay station installed on the terrestrial. The "ground" represents not only a land but also a terrestrial location in a broad sense including underground, above-water, and underwater. Note that, in the following description, the description of "terrestrial station" may be referred to as a "gateway".

The base station in LTE may be referred to as Evolved Node B (eNodeB) or eNB. NR base stations may be referred to as gNodeB or gNB. 6G base stations may be referred to as 6G NodeB (6GNB). In LTE, NR, and 6G, a terminal apparatus (also referred to as a mobile station, or terminal) may be referred to as User Equipment (UE). The terminal apparatus is a type of communication apparatus, and is also referred to as a mobile station or a terminal.

The terminal apparatus 40 may be connectable to the network using a radio access technology (wireless communication method) other than LTE, NR, 6G, Wi-Fi, or Bluetooth. For example, the terminal apparatus 40 may be connectable to the network by using low power wide area (LPWA) communication. Furthermore, the terminal apparatus 40 may be connectable to the network using wireless communication of a proprietary standard.

Here, LPWA communication is wireless communication that enables low-power wide-range communication. For example, the LPWA wireless is Internet of Things (IoT) wireless communication using a specified low power wireless (for example, the 920 MHz band) or an Industry-Science-Medical (ISM) band. The LPWA communication used by the terminal apparatus 40 may conform to the LPWA standard. Examples of the LPWA standard include ELTRES, ZETA, SIGFOX, LoRaWAN, and NB-Iot. Needless to say, the LPWA standard is not to be limited thereto, and may be other LPWA standards.

Each wireless communication apparatus in FIG. 2 may be considered as an apparatus in a logical sense. That is, a part of each wireless communication apparatus may be implemented by a virtual machine (VM), a container, a docker, or the like, and they may be implemented on physically the same piece of hardware.

In the present embodiment, the concept of the "wireless communication apparatus" includes not only a portable mobile apparatus (terminal apparatus) such as a mobile terminal but also an apparatus installed in a structure or a mobile body. The structure or a mobile body itself may be regarded as a wireless communication apparatus. The wireless communication apparatus conceptually includes not only the terminal apparatus 40 but also the base station 30. The wireless communication apparatus is a type of processing apparatus and information processing apparatus. The wireless communication apparatus can be rephrased as a transmission apparatus or a reception apparatus.

Hereinafter, configurations of individual wireless communication apparatuses included in the communication system 1 will be specifically described. The configuration of each wireless communication apparatus illustrated below is just an example. The configuration of each wireless communication apparatus may differ from the configuration below.

### <2-1. Configuration of server>

First, a configuration of the server 10 will be described.

The server 10 is an information processing apparatus (computer) that provides various services to the terminal apparatus 40. For example, the server 10 is an application server or a web server. The server 10 may be a PC server, a midrange server, or a mainframe server. The server 10 may be an information processing apparatus that performs data processing (edge processing) near the user or the terminal. For example, the server 10 may be an information processing apparatus (computer) provided close to or built in a base station. The server 10 may naturally be an information processing apparatus that performs cloud computing. The server 10 of the present embodiment includes the application function.

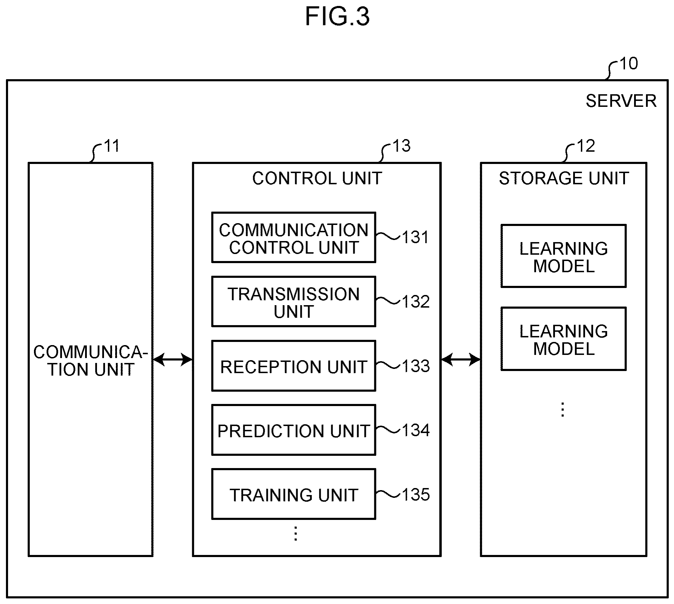

FIG. 3 is a diagram illustrating a configuration example of the server 10 according to the embodiment of the present disclosure. The server 10 includes a communication unit 11, a storage unit 12, and a control unit 13. Note that the configuration illustrated in FIG. 3 is a functional configuration, and the hardware configuration may be different from this. Furthermore, the functions of the server 10 may be installed in a distributed manner in a plurality of physically separated configurations. For example, the server 10 may include a plurality of information processing apparatuses.

The communication unit 11 is a communication interface for communicating with other apparatuses. For example, the communication unit 11 is a network interface. An example of the communication unit 11 is a local area network (LAN) interface such as a Network Interface Card

(NIC). The communication unit 11 may be a wired interface, or may be a wireless interface. The communication unit 11 functions as a communication means of the server 10. Under the control of the control unit 13, the communication unit 11 communicates with the management apparatus 20, the base station 30, the terminal apparatus 40, and another server 10.

The storage unit 12 is a data readable/writable storage device such as dynamic random access memory (DRAM), static random access memory (SRAM), a flash drive, or a hard disk. The storage unit 12 functions as a storage means of the server 10. The storage unit 12 stores a learning model (prediction model) for predicting the future quality of the mobile network. The learning model will be described below.

The control unit 13 is a controller that controls individual units of the server 10. The control unit 13 may be implemented by a processor such as a central processing unit (CPU) or a micro processing unit (MPU), for example. Specifically, the control unit 13 may be implemented by execution of various programs stored in the storage device inside the management apparatus 20 by the processor using random access memory (RAM) or the like as a work area. The control unit 13 may be implemented by an integrated circuit such as an application specific integrated circuit (ASIC) or a field programmable gate array (FPGA). Furthermore, the control unit 13 may be implemented by a Graphics Processing Unit (GPU). The CPU, MPU, ASIC, FPGA, and GPU can all be regarded as controllers. The control unit 13 may include a plurality of physically separated objects. For example, the control unit 13 may include a plurality of semiconductor chips.

The control unit 13 includes a communication control unit 131, a transmission unit 132, a reception unit 133, a prediction unit 134, and a training unit 135. Individual blocks (communication control unit 131 to training unit 135) constituting the control unit 13 are functional blocks individually indicating functions of the control unit 13. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 13 may be configured in a functional unit different from the above-described functional block. The functional block may be configured by using any method.

### <2-2. Configuration of management apparatus>

The management apparatus 20 is an information processing apparatus (computer) that manages a wireless network. For example, the management apparatus 20 is an information processing apparatus that manages communication of the base station 30. The management apparatus 20 may be an apparatus having a function as a Mobility Management Entity (MME), for example. The management apparatus 20 may be an apparatus having a function as an Access and Mobility Management Function (AMF) and/or a Session Management Function (SMF). The MME, the AMF, and the SMF are control plane network function nodes in the core network. The management apparatus 20 may be an apparatus having a function as a 6G control plane network function (6G CPNF). The 6G CPNF include one or a plurality of logical nodes.

The functions of the management apparatus 20 are not to be limited to MME, AMF, SMF, or 6G CPNF. The management apparatus 20 may be an apparatus having a function as a Network Slice Selection Function (NSSF), an Authentication Server Function (AUSF), a Policy Control Function (PCF), or Unified Data Management (UDM). Furthermore, the management apparatus 20 may be an apparatus having a function as a Home Subscriber Server (HSS).

Note that the management apparatus 20 may have a function of a gateway. For example, the management apparatus 20 may have a function as a Serving Gateway (S-GW) or a Packet Data Network Gateway (P-GW). Furthermore, the management apparatus 20 may have a function as a User Plane Function (UPF). At this time, the management apparatus 20 may have a plurality of UPFs. The management apparatus 20 may be an apparatus having a function as a 6G user plane network function (6G UPNF).

The core network includes a plurality of network functions. Each network function may be integrated into one physical device or distributed to a plurality of physical devices. That is, the management apparatus 20 can be disposed in a plurality of apparatuses as distributed arrangement. Furthermore, this distributed arrangement may be controlled to be performed dynamically. The base station 30 and the management apparatus 20 constitute one network, and provide a wireless communication service to the terminal apparatus 40. The management apparatus 20 is connected to the Internet, and the terminal apparatus 40 can use various services provided over the Internet via the base station 30.

Note that the management apparatus 20 does not necessarily have to be an apparatus constituting a core network. For example, it is assumed that the core network is a core network of Wideband Code Division Multiple Access (W-CDMA) or Code Division Multiple Access 2000 (cdma 2000). At this time, the management apparatus 20 may be an apparatus that functions as a Radio Network Controller (RNC).

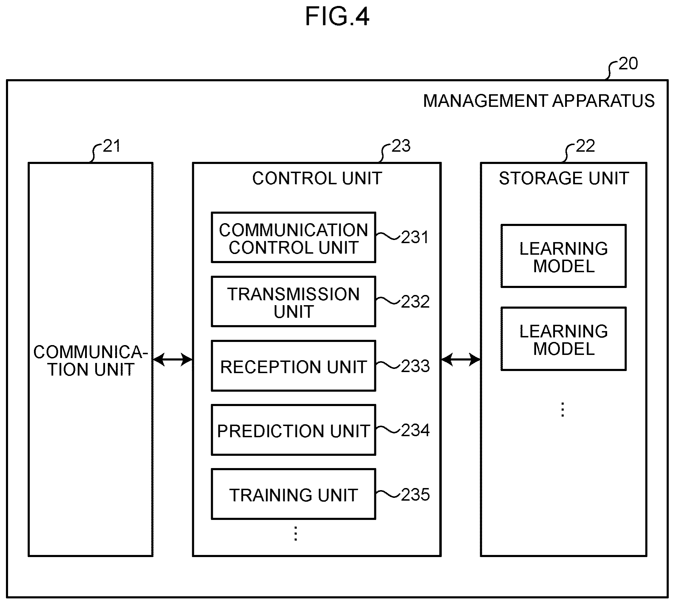

FIG. 4 is a diagram illustrating a configuration example of the management apparatus 20 according to the present embodiment. The management apparatus 20 includes a communication unit 21, a storage unit 22, and a control unit 23. The configuration illustrated in FIG. 4 is a functional configuration, and the hardware configuration may be different from this configuration. The functions of the management apparatus 20 may be implemented in a statically or dynamically distributed form in a plurality of physically separated configurations. The management apparatus 20 may be constituted with a plurality of server apparatuses.

The communication unit 21 is a communication interface for communicating with a wireless communication apparatus (for example, the base station 30). The communication unit 21 may be a network interface or a device connection interface. The communication unit 21 may be a local area network (LAN) interface such as a network interface card (NIC), or may be a universal serial bus (USB) interface including a USB host controller, a USB port, and the like. The communication unit 21 may be a wired interface, or may be a wireless interface. The communication unit 21 functions as a communication means of the management apparatus 20. The communication unit 21 is controlled by the control unit 23.

The storage unit 22 is a readable/writable storage device such as DRAM, SRAM, flash memory, or a hard disk. The storage unit 22 functions as a storage means in the management apparatus 20. The storage unit 22 stores, for example, a connection state of the terminal apparatus 40. The storage unit 22 stores a Radio Resource Control (RRC) state or an EPS connection management (ECM) state or a 5G system connection management (CM) state of the terminal apparatus 40. The storage unit 22 may function as a unit referred to as "home memory" that stores location information of the terminal apparatus 40. The storage unit 22 also stores a learning model (prediction model) for predicting the future quality of the mobile network. The learning model will be described below.

The control unit 23 is a controller that controls individual parts of the management apparatus 20. The control unit 23 may be implemented by, for example, a processor such as a CPU or an MPU. For example, the control unit 23 is implemented by the processor executing various programs stored in the storage device inside the management apparatus 20 using RAM or the like as a work area. The control unit 23 may be implemented by an integrated circuit such as an ASIC or an FPGA. The control unit 23 may be implemented by a GPU. The CPU, MPU, ASIC, FPGA, and GPU can all be regarded as controllers. The control unit 23 may include a plurality of physically separated objects. For example, the control unit 23 may include a plurality of semiconductor chips.

The control unit 23 includes a communication control unit 231, a transmission unit 232, a reception unit 233, a prediction unit 234, and a training unit 235. Individual blocks (communication control unit 231 to training unit 235) constituting the control unit 23 are functional blocks individually indicating functions of the control unit 23. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 23 may be configured in a functional unit different from the above-described functional block. The functional block may be configured by using any method.

### <2-3. Configuration of base station>

The base station 30 is a wireless communication apparatus that performs wireless communication with other wireless communication apparatuses (for example, the terminal apparatus 40 or another base station 30). The base station 30 may wirelessly communicate with the terminal apparatus 40 via a relay station, or may directly wirelessly communicate with the terminal apparatus 40.

The base station 30 is an apparatus corresponding to a radio base station (Base Station, Node B, eNB, gNB, or 6GNB, etc.) or a radio access point. The base station 30 may be a radio relay station. The base station 30 may be an optical link apparatus referred to as a Remote Radio Head (RRH). Furthermore, the base station 30 may be a receiving station such as a Field Pickup Unit (FPU). The base station 30 may be an Integrated Access and Backhaul (IAB) donor node or an IAB relay node that provides a radio access channel and a radio backhaul channel by using time division multiplexing, frequency division multiplexing, or space division multiplexing.

The radio access technology used by the base station 30 may be a cellular communication technology. The radio access technology used by the base station 30 may be a wireless LAN technology. For example, the radio access technology used by the base station 30 may be a low power wide area (LPWA) communication technology. Note that the radio access technology used by the base station 30 is not limited thereto, and may be other radio access technologies. The radio communication used by the base station 30 may be radio communication using a millimeter wave or radio communication using a terahertz wave (THz wave). The wireless communication used by the base station 30 may be wireless communication using radio waves or wireless communication (optical wireless communication) using infrared rays or visible light. The base station 30 may be capable of Non-Orthogonal Multiple Access (NOMA) communication with the terminal apparatus 40. Here, NOMA communication refers to communication (transmission, reception, or both) using non-orthogonal resources. The base station 30 may be capable of performing NOMA communication with another base station 30.

The base station 30 may be capable of communicating with each other via a base station-core network interface (for example, NG Interface, S1 Interface, or the like). This interface may be implemented as wired or wireless interface. Furthermore, the base stations may be capable of performing mutual communication with each other by an inter-base station interface (for example, Xn Interface, X2 Interface, F1 Interface, or the like). This interface may be implemented as wired or wireless interface.

The base station (also referred to as a "base station apparatus") conceptually includes not only a donor base station but also a relay base station (also referred to as a "relay station"). The relay base station may be any one of RF Repeater, Smart Repeater, and Intelligent Surface. A base station conceptually includes not only a structure having a function of a base station but also a device installed in the structure.

Examples of the structure include a building such as a high-rise building, a house, a steel tower, a station facility, an airport facility, a harbor facility, an office building, a school building, a hospital, a factory, a commercial facility, or a stadium. The structure conceptually includes not only buildings but also non-building structures such as tunnels, bridges, dams, fences, and steel columns, as well as facilities such as cranes, gates, and windmills. The structure conceptually includes not only land-based (ground-based, in a narrow sense) structures or underground structures but also structures on the water, such as a jetty or a mega-float, and underwater structures such as an ocean observation facility. The base station can also be rephrased as an information processing apparatus.

The base station 30 may be a donor station or a relay station. The base station 30 may be a fixed station or a mobile station. The mobile station is a wireless communication apparatus (for example, a base station) configured to be movable. At this time, the base station 30 may be an apparatus installed on a mobile body, or may be a mobile body itself. For example, a relay station having mobility can be regarded as the base station 30 as a mobile station. In addition, an apparatus designed to have mobility, such as an Unmanned Aerial Vehicle (UAV) represented by a drone, or a smartphone, and having a function of a base station (at least a part of the function of a base station) also corresponds to the base station 30 as a mobile station.

Here, the mobile body may be a mobile terminal such as a smartphone or a mobile phone. The mobile body may be a mobile body that moves on the land (ground in a narrow sense) (for example, a vehicle such as an automobile, a motorcycle, a bus, a truck, a motorbike, a train, or a linear motor car), or a mobile body (for example, subway) that moves under the ground (for example, through a tunnel). The mobile body may be a mobile body that moves on the water (for example, a ship such as a passenger ship, a cargo ship, or a hovercraft), or a mobile body that moves underwater (for example, a submersible ship such as a submersible boat, a submarine, or an unmanned submarine). The mobile body may be a mobile body that moves in the atmosphere (for example, an aircraft such as an airplane, an airship, or a drone).

The base station 30 may be a terrestrial base station (terrestrial station) installed on the ground. The base station 30 may be a base station disposed on a structure on the ground, or may be a base station installed in a mobile body moving on the ground. The base station 30 may be an antenna installed in a structure such as a building and a signal processing apparatus connected to the antenna. The base station 30 may be a structure or a mobile body itself. The "ground" represents not only a land (ground in a narrow sense) but also a terrestrial location in a broad sense including underground, above-water, and underwater. The base station 30 is not limited to a terrestrial base station. In a case where the communication system 1 is a satellite communication system, the base station 30 may be an aircraft station. From the perspective of a satellite station, an aircraft station located on the earth is a terrestrial station.

The base station 30 is not limited to a terrestrial station. The base station 30 may be a non-terrestrial base station (non-terrestrial station) capable of floating in the air or space. For example, the base station 30 may be an aircraft station or a satellite station.

The satellite station is a satellite station capable of floating outside the atmosphere. The satellite station may be an apparatus mounted on a space mobile body such as an artificial satellite, or may be a space mobile body itself. A space mobile body is a mobile body that moves outside the atmosphere. Examples of the space mobile body include artificial bodies such as artificial satellites, spacecraft, space stations, or probes. The satellite serving as the satellite station may be any of a low earth orbiting (LEO) satellite, a medium earth orbiting (MEO) satellite, a geostationary earth orbiting (GEO) satellite, or a highly elliptical orbiting (HEO) satellite. The satellite station may be an apparatus mounted on a low earth orbiting satellite, a medium earth orbiting satellite, a geostationary earth orbiting satellite, or a highly elliptical orbiting satellite.

The aircraft station is a wireless communication apparatus capable of floating in the atmosphere, such as an aircraft. The aircraft station may be an apparatus mounted on an aircraft or the like, or may be an aircraft itself. The aircraft conceptually includes not only heavy aircraft such as an airplane or a glider but also light aircraft such as a balloon or an airship. The aircraft conceptually includes not only a heavy aircraft or a light aircraft but also a rotorcraft such as a helicopter or an auto-gyro. The aircraft station or an aircraft equipped with an aircraft station may be an unmanned aerial vehicle such as a drone.

The unmanned aerial vehicle conceptually includes an unmanned aircraft system (UAS) and a tethered UAS. The unmanned aircraft conceptually includes also a Lighter-than-Air (LTA) unmanned aircraft system (UAS) and a Heavier-than-Air (HTA) unmanned aircraft system (UAS). The unmanned aircraft conceptually includes also High Altitude unmanned aircraft system (UAS) platforms (HAPs).

The coverage of the base station 30 may be relatively large such as a macro cell or relatively small such as a pico cell. The coverage of the base station 30 may be extremely small such as a femto cell. The base station 30 may have a beamforming function. In this case, the base station 30 may form a cell or a service area for each beam.

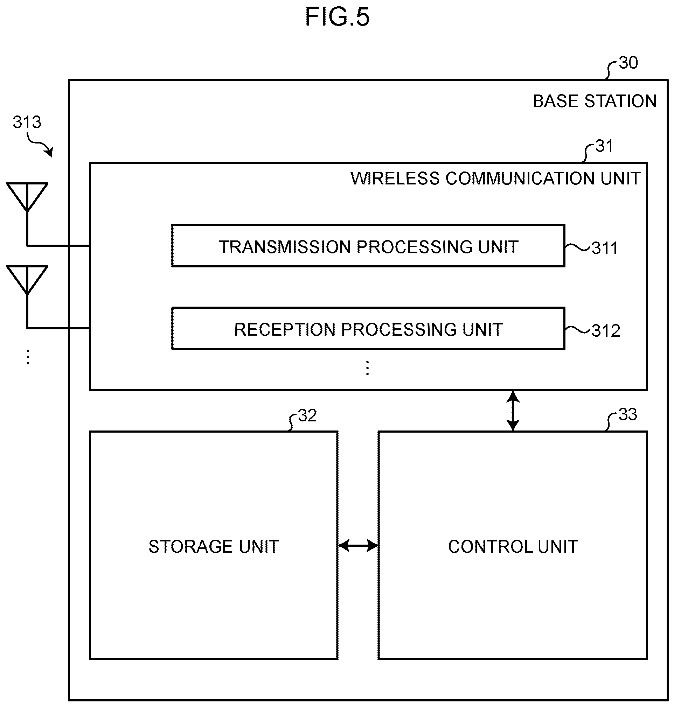

FIG. 5 is a diagram illustrating a configuration example of the base station 30 according to the present embodiment. The base station 30 includes a wireless communication unit 31, a storage unit 32, and a control unit 33. The configuration illustrated in FIG. 5 is a functional configuration, and the hardware configuration may be different from this. Furthermore, the functions of the base station 30 may be implemented in a distributed form in a plurality of physically separated configurations.

The wireless communication unit 31 is a signal processing unit for performing wireless communication with other wireless communication apparatuses (for example, the terminal apparatus 40 or another base station 30). The wireless communication unit 31 is controlled by the control unit 33. The wireless communication unit 31 may support one or a plurality of radio access methods. The wireless communication unit 31 may support at least one of NR, LTE, and 6G. The wireless communication unit 31 may support W-CDMA, cdma2000, and the like in addition to NR, LTE, and 6G. The wireless communication unit 31 may support an automatic retransmission technology such as Hybrid Automatic Repeat reQuest (HARQ).

The wireless communication unit 31 includes a transmission processing unit 311, a reception processing unit 312, and an antenna 313. The wireless communication unit 31 may include a plurality of the transmission processing units 311, a plurality of the reception processing units 312, and a plurality of the antennas 313. In a case where the wireless communication unit 31 supports a plurality of radio access schemes, individual portions of the wireless communication unit 31 may be configured separately for each of the radio access schemes. The transmission processing unit 311 and the reception processing unit 312 may be configured separately for LTE, NR, and 6G. The antenna 313 may include a plurality of antenna elements, for example, a plurality of patch antennas. The wireless communication unit 31 may have a beamforming function. For example, the wireless communication unit 31 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The transmission processing unit 311 performs transmission processing of downlink control information and downlink data. The transmission processing unit 311 codes the downlink control information and the downlink data input from the control unit 33 by using a coding scheme such as block coding, convolutional coding, or turbo coding. The coding may perform coding using a polar code or a Low Density Parity Check (LDPC) code. The transmission processing unit 311 modulates the coded bits by a predetermined modulation scheme such as BPSK, QPSK, 16 QAM, 64 QAM, or 356 QAM. In this case, the signal points on the constellation do not necessarily have to be equidistant. The constellation may be a non-uniform constellation (NUC). The transmission processing unit 311 multiplexes the modulation symbol of each of channels and the downlink reference signal and allocates the multiplexed signals on a predetermined resource element. Subsequently, the transmission processing unit 311 performs various types of signal processing on the multiplexed signal. For example, the transmission processing unit 311 performs processing such as conversion to the frequency domain using fast Fourier transform, addition of a guard interval (cyclic prefix), generation of a baseband digital signal, conversion to an analog signal, quadrature modulation, upconvert, removal of extra frequency components, and power amplification. The signal generated by the transmission processing unit 311 is transmitted from the antenna 313.

The reception processing unit 312 processes an uplink signal received via the antenna 313. For example, the reception processing unit 312 performs processing on the uplink signal, such as down-conversion, removal of unnecessary frequency components, amplification level control, orthogonal demodulation, conversion to digital signal, removal of guard interval (cyclic prefix), and frequency domain signal extraction using fast Fourier transform. The reception processing unit 312 Subsequently demultiplexes an uplink channel such as a physical uplink shared channel (PUSCH) or a physical uplink control channel (PUCCH) and an uplink reference signal from the signal that has undergone these processing procedures. Subsequently, the reception processing unit 312 demodulates a received signal using a modulation scheme such as binary phase shift keying (BPSK) or quadrature phase shift keying (QPSK) for the modulation symbol of the uplink channel. The modulation scheme used in the demodulation may be 16 quadrature amplitude modulation (QAM), 64 QAM, or 356 QAM. In this case, the signal points on the constellation do not necessarily have to be equidistant. The constellation may be a non-uniform constellation (NUC). Subsequently, the reception processing unit 312 performs decoding processing on the coded bits of the demodulated uplink channel. The decoded uplink data and uplink control information are output to the control unit 33.

The antenna 313 is an antenna apparatus that performs mutual conversion of a current and a radio wave. The antenna 313 may include one antenna element, for example, one patch antenna. Furthermore, the antenna 313 may include a plurality of antenna elements (for example, a plurality of patch antennas). In a case where the antenna 313 includes a plurality of antenna elements, the wireless communication unit 31 may have a beamforming function. The wireless communication unit 31 may control the directivity of a radio signal using a plurality of antenna elements to generate a directional beam. The antenna 313 may be a dual polarized antenna. In a case where the antenna 313 is a dual polarized antenna, the wireless communication unit 31 may use, in radio signal transmission, vertically polarized waves (V-polarized waves) and horizontally polarized waves (H-polarized waves) (or dual polarized waves in polarization direction at 45 degrees and -45 degrees with the vertical direction). The wireless communication unit 31 may control directivity of a radio signal transmitted using vertically polarized waves and horizontally polarized waves (or dual polarization in polarization direction at 45 degrees and -45 degrees with vertical direction). Furthermore, the wireless communication unit 31 may transmit and receive spatially multiplexed signals via a plurality of layers including a plurality of antenna elements.

The storage unit 32 is a readable/writable storage device such as DRAM, SRAM, flash memory, or a hard disk. The storage unit 32 functions as a storage means in the base station 30.

The control unit 33 is a controller that controls individual parts of the base station 30. The control unit 33 controls the wireless communication unit to perform wireless communication with another wireless communication apparatus (for example, the terminal apparatus 40 or another base station 30). The control unit 33 may be implemented by a processor such as a CPU or an MPU. Specifically, the control unit 33 is realized by a processor executing various programs stored in a storage device inside the base station 30 using RAM or the like as a work area. The control unit 33 may be implemented by an integrated circuit such as an ASIC or an FPGA. The control unit 33 may be implemented by a GPU. The CPU, MPU, ASIC, FPGA, and GPU can all be regarded as controllers. The control unit 33 may include a plurality of physically separated objects. For example, the control unit 33 may include a plurality of semiconductor chips.

In some embodiments, the base station 30 may be configured by a set of a plurality of physical or logical apparatuses. As an example, the base station 30 in the present embodiment may be classified into a plurality of apparatuses such as a Baseband Unit (BBU) and a Radio Unit (RU). The base station 30 may be construed as a set of the plurality of apparatuses. In addition, the base station may be either one or both of the BBU and the RU. The BBU and the RU may be connected to each other via a predetermined interface (for example, an enhanced Common Public Radio Interface (eCPRI)).

The RU may be referred to as a Remote Radio Unit (RRU) or a Radio DoT (RD). The RU may support a gNB Distributed Unit (gNB-DU) described below. The BBU may support a gNB Central Unit) (gNB-CU) described below. The RU may be an apparatus integrally formed with an antenna. An antenna of the base station 30, for example, an antenna integrally formed with an RU, may employ an Advanced Antenna System and support MIMO (for example, FD-MIMO) or beamforming. For example, the antenna of the base station 30 may include 64 transmitting antenna ports and 64 receiving antenna ports.

The antenna mounted on the RU may be an antenna panel including one or more antenna elements, and the RU may include one or more antenna panels. The RU may be equipped with two types of antenna panels: a horizontally polarized antenna panel and a vertically polarized antenna panel. The RU may be equipped with two types of antenna panels, that is, a right-handed circularly polarized antenna panel and a left-handed circularly polarized antenna panel, or an antenna panel with a polarization direction of 45 degrees with the vertical direction and an antenna panel with a polarization direction of -45 degrees with the vertical direction. A plurality of antennas having the plurality of polarization directions may be mounted on one antenna panel. The RU may form and control an independent beam for each antenna panel.

The plurality of base stations 30 may be connected to each other. One or the plurality of base stations 30 may be included in a Radio Access Network (RAN). That is, the base station 30 may be simply referred to as a RAN, a RAN node, an Access Network (AN), AN node, or the like. RAN in LTE is sometimes referred to as Enhanced Universal Terrestrial RAN (EUTRAN). RAN in NR may be referred to as NGRAN. In addition, RAN in 6G may be referred to as 6GRAN. RAN in W-CDMA (UMTS) may be referred to as UTRAN.

The base station 30 in LTE may be referred to as Evolved Node B (eNodeB) or eNB. That is, EUTRAN includes one or a plurality of eNodeB (eNB). NR base stations 30 may be referred to as gNodeB or gNB. At this time, NGRAN contains one or a plurality of gNBs. A 6G base station may be referred to as a 6GNodeB, a 6gNodeB, a 6GNB, or a 6gNB. At this time, 6GRAN contains one or a plurality of 6GNBs. EUTRAN may include gNB (en-gNB) connected to the core network (EPC) in LTE communication systems (EPS). NGRAN may include an ng-eNB connected to the core network 5GC in a 5G communication system (5GS).

When the base station 30 is eNB, gNB, 6GNB or the like, the base station 30 may be referred to as 3GPP access. When the base station 30 is a radio access point, the base station 30 may be referred to as non-3GPP access. The base station 30 may be an optical link apparatus referred to as a Remote Radio Head (RRH). Furthermore, in a case where the base station 30 is a gNB, the base station 30 may be a combination of the gNB-CU and the gNB-DU described above, or may be any of the gNB-CU and the gNB-DU.

Here, in order to have a communication with the UE, the gNB-CU hosts a plurality of upper layers (for example, Radio Resource Control (RRC), Service Data Adaptation Protocol (SDAP), and Packet Data Convergence Protocol (PDCP)) in an access stratum. On the other hand, the gNB-DU hosts a plurality of lower layers (for example, Radio Link Control (RLC), Medium Access Control (MAC), and Physical Layer (PHY)) in an access stratum. That is, among messages/information to be described below, RRC signaling (semi-static notification) may be generated by the gNB-CU, while MAC CE and DCI (dynamic notification) may be generated by the gNB-DU. Alternatively, among the RRC configurations (semi-static notifications), some configurations such as IE: cellGroupConfig may be generated by the gNB-DU, while the remaining configurations may be generated by the gNB-CU, for example. These configurations may be transmitted and received through an F1 interface described below.

The base station 30 may be configured to be able to communicate with another base station. When the plurality of base stations 30 are eNBs or a combination of an eNB and an en-gNB, these base stations 30 may be connected by an X2 interface. When the plurality of base stations 30 are gNBs or a combination of a gn-eNB and a gNB, these base stations 30 may be connected by an Xn interface. When the plurality of base stations 30 are a combination of a gNB-CU and a gNB-DU, these base stations 30 may be interconnected by the F1 interface described above. A message/information (for example, RRC signaling, MAC Control Element (MAC CE), Downlink Control Information (DCI), or the like) to be described below may be transmitted among the plurality of base stations 30 via an interface such as an X2 interface, an Xn interface, an F1 interface, for example.

The cell provided by the base station 30 may be referred to as a serving cell. The serving cell conceptually includes a primary cell (PCell) and a secondary cell (SCell). When dual connectivity is provided to the terminal apparatus 40, the PCell provided by a Master Node (MN) and zero or one or more SCells may be referred to as a Master Cell Group. Examples of dual connectivity include EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity, etc. Examples of the dual connectivity further include NR-6G Dual Connectivity and 6G-NR Dual Connectivity.

The serving cell may include a Primary Secondary Cell or Primary SCG Cell (PSCell). In a case where dual connectivity is provided to the terminal apparatus 40, the PSCell and the zero or one or more SCells provided by a secondary node (SN) may be referred to as Secondary Cell Group (SCG). Unless specially configured (for example, PUCCH on SCell), a physical uplink control channel (PUCCH) is transmitted by the PCell and the PSCell, but is not transmitted by the SCell. The radio link failure is also detected by the PCell and the PSCell, but is not detected by the SCell (need not be detected). In this manner, since the PCell and the PSCell have a special role in the serving cell, these cells are also referred to as Special Cells (SpCells).

One cell may be associated with one downlink component carrier and one uplink component carrier. The system bandwidth corresponding to one cell may be divided into a plurality of bandwidth parts (BWPs). In this case, one or a plurality of BWPs may be configured for the terminal apparatus 40, and one BWP may be used for the terminal apparatus 40 as an active BWP. Radio resources (for example, a frequency band, a numerology (subcarrier spacing), and a slot format (slot configuration)) usable by the terminal apparatus 40 may be different for each cell, each component carrier, or each BWP.

### <2-4. Configuration of terminal apparatus>

Next, a configuration of the terminal apparatus 40 will be described.

The terminal apparatus 40 is a wireless communication apparatus that performs wireless communication with another wireless communication apparatus (for example, the base station 30 or another terminal apparatus 40). The terminal apparatus 40 can be implemented by employing any form of information processing apparatus (computer). For example, the terminal apparatus 40 may be a mobile terminal such as a mobile phone, a smart device (smartphone or tablet), a personal digital assistant (PDA), or a laptop PC. The terminal apparatus 40 may be an imaging apparatus (for example, a camcorder) having a communication function. The terminal apparatus 40 may be a motorcycle, a moving relay vehicle, or the like, equipped with a communication device such as the field pickup unit (FPU). The terminal apparatus 40 may be a Machine to Machine (M2M) device or an Internet of Things (IoT) device. The terminal apparatus 40 may be a wearable device such as a smart watch.

The terminal apparatus 40 may be an xR device such as an augmented reality (AR) device, a virtual reality (VR) device, or a mixed reality (MR) device. At this time, the xR device may be an eyeglass-type device such as AR glasses or MR glasses, or may be a head-mounted device such as a VR head-mounted display. In a case where the terminal apparatus 40 is an xR device, the terminal apparatus 40 may be a standalone device including only a portion worn on the user (for example, the eyeglass portion). Furthermore, the terminal apparatus 40 may be a terminal-linked device including the portion worn on the user (for example, the eyeglass portion) and a terminal portion (for example, a smart device) linked with the portion worn on the user.

The terminal apparatus 40 may be capable of performing NOMA communication with the base station 30. The terminal apparatus 40 may be able to use an automatic retransmission technology such as HARQ when communicating with the base station 30. The terminal apparatus 40 may be capable of sidelink communication with another terminal apparatus 40. The terminal apparatus 40 may be capable of using an automatic retransmission technology such as HARQ when performing sidelink communication. The terminal apparatus 40 may be able to perform NOMA communication when performing sidelink communication with another terminal apparatus 40. The terminal apparatus 40 may be able to perform LPWA communication with another wireless communication apparatus such as the base station 30. The wireless communication used by the terminal apparatus 40 may be wireless communication using millimeter waves. The wireless communication (including sidelink communication) used by the terminal apparatus 40 may be wireless communication using radio waves or wireless communication using infrared rays or visible light, namely, optical wireless communication.

The terminal apparatus 40 may be a movable wireless communication apparatus, that is, a mobile apparatus. Furthermore, the terminal apparatus 40 may be a wireless communication apparatus installed on a mobile body, or may be the mobile body itself. The terminal apparatus 40 may be a vehicle that moves on a road, such as an automobile, a bus, a truck, or a motorbike, or may be a wireless communication apparatus mounted on the vehicle. The mobile body may be a mobile terminal, or may be a mobile body that moves on land (on the ground in a narrow sense), in the ground, on water, or under water. The mobile body may be a mobile body that moves inside the atmosphere, such as an aircraft, airship, balloon, or a helicopter, or may be a mobile body that moves outside the atmosphere, such as an artificial satellite. The mobile body may be an unmanned aerial vehicle (UAV) such as a drone. The terminal apparatus 40 may be a wireless communication apparatus mounted on a mobile body.

The terminal apparatus 40 may be capable of performing communication while being simultaneously connected to a plurality of base stations 30 or a plurality of cells. For example, when one base station 30 supports a communication area via a plurality of cells (for example, pCell and sCell), it is possible to bundle the plurality of cells and communicate between the base station 30 and the terminal apparatus 40 by using a carrier aggregation (CA) technology, a dual connectivity (DC) technology, or a multi-connectivity (MC) technology. Alternatively, the terminal apparatus 40 and the plurality of base stations 30 can communicate with each other by a Coordinated MultiPoint Transmission and Reception (CoMP) technology via cells of different base stations 30.

The terminal apparatus 40 may be a relay terminal that relays communication to a remote terminal.

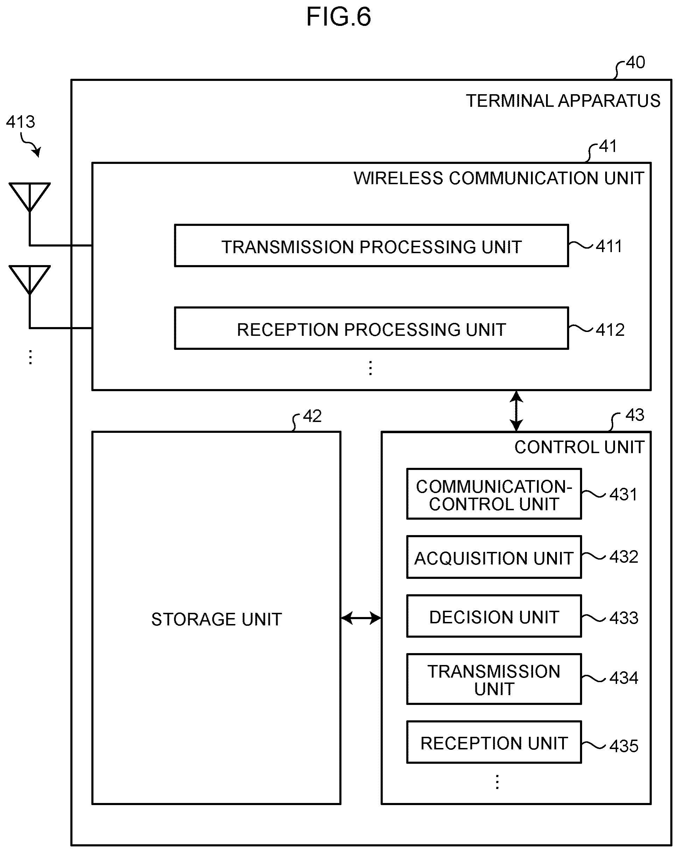

FIG. 6 is a diagram illustrating a configuration of the terminal apparatus 40 according to the present embodiment. The terminal apparatus 40 includes a wireless communication unit 41, a storage unit 42, and a control unit 33. The configuration illustrated in FIG. 6 is a functional configuration, and the hardware configuration may be different from this configuration. Furthermore, the functions of the terminal apparatus 40 may be implemented in a distributed manner in a plurality of physically separated configurations.

The wireless communication unit 41 is a signal processing unit for performing wireless communication with other wireless communication apparatuses (for example, the base station 30 and another terminal apparatus 40). The wireless communication unit 41 is controlled by the control unit 43. The wireless communication unit 41 may support one or a plurality of radio access schemes. The wireless communication unit 41 may support at least one of NR, LTE, and 6G. The wireless communication unit 41 may support W-CDMA, cdma2000, and the like in addition to NR, LTE, and 6G. The wireless communication unit 41 may support an automatic retransmission technology such as Hybrid Automatic Repeat reQuest (HARQ).

The wireless communication unit 41 includes a transmission processing unit 411, a reception processing unit 412, and an antenna 413. The wireless communication unit 41 may include a plurality of the transmission processing units 411, a plurality of the reception processing units 412, and a plurality of the antennas 413. In a case where the wireless communication unit 41 supports a plurality of radio access schemes, individual portions of the wireless communication unit 41 may be configured separately for each of the radio access schemes. The transmission processing unit 411 and the reception processing unit 412 may be configured separately for LTE, NR, and 6G. The antenna 413 may include a plurality of antenna elements, for example, a plurality of patch antennas. The wireless communication unit 41 may have a beamforming function. For example, the wireless communication unit 41 may have a polarization beamforming function using vertically polarized waves (V-polarized waves) and horizontally polarized waves (H-polarized waves) (or may have a polarization beamforming function using dual polarization in polarization directions of 45 degrees and - 45 degrees with the vertical direction).

The storage unit 42 is a readable/writable storage device such as DRAM, SRAM, flash memory, or a hard disk. The storage unit 42 functions as a storage means in the terminal apparatus 40.

The control unit 43 is a controller that controls individual parts of the terminal apparatus 40. The control unit 43 controls the wireless communication unit to perform wireless communication with another wireless communication apparatus (for example, the base station 30 or another terminal apparatus 40). The control unit 43 may be implemented by a processor such as a CPU or an MPU. For example, the control unit 23 is implemented by the processor executing various programs stored in the storage device inside the terminal apparatus 40 using RAM or the like as a work area. The control unit 43 may be implemented by an integrated circuit such as an ASIC or an FPGA. The CPU, MPU, ASIC, and FPGA can all be regarded as controllers. The control unit 43 may be implemented by a GPU. The CPU, MPU, ASIC, FPGA, and GPU can all be regarded as controllers. The control unit 43 may include a plurality of physically separated objects. For example, the control unit 43 may include a plurality of semiconductor chips.

The control unit 43 includes a communication control unit 431, an acquisition unit 432, a decision unit 433, a transmission unit 434, and a reception unit 435. Individual blocks (communication control unit 431 to reception unit 435) constituting the control unit 43 are functional blocks individually indicating functions of the control unit 43. These functional blocks may be software blocks or hardware blocks. For example, each of the functional blocks described above may be one software module realized by software (including a microprogram) or one circuit block on a semiconductor chip (die). Needless to say, each of the functional blocks may be formed as one processor or one integrated circuit. Note that the control unit 43 may be configured in a functional unit different from the above-described functional block. The functional block may be configured by using any method.

### <2-5. Predictor>

As described above, the application function included in the server 10 or the management apparatus 20 predicts the future quality of the mobile network using a predictor. For example, the application function makes predictions by appropriately selecting classification and regression according to the type of parameter (for example, network quality) as a prediction target. When creating the predictor, the application function may perform processing such as normalization or standardization on the training data for the purpose of improving the accuracy of the predictor.

The predictor includes a learning model, for example. Hereinafter, the learning model used in the present embodiment will be described.

The storage unit 12 of the server 10 or the storage unit 22 of the management apparatus 20 stores the learning model. The application function included in the server 10 or the management apparatus 20 generates network quality information using the learning model.

Note that the learning model can be rephrased as an artificial intelligence (AI) model, a machine learning (ML) model, or a trained model. In the following description, the learning model may be simply referred to as a model.

The learning model is a neural network model, for example. The neural network model includes an input layer, an intermediate layer (or a hidden layer), and an output layer, each including a plurality of nodes, the nodes being connected to each other via edges. Each layer has a function referred to as an activation function, and each edge is weighted. The learning model has one or a plurality of intermediate layers (or a hidden layer). In a case where the learning model is implemented as a neural network model, learning of the learning model includes, for example, setting the number of intermediate layers (or hidden layers), the number of nodes in each layer, the weight of each edge, or the like.

Here, the neural network model may be a model trained by deep learning. In this case, the neural network model may be a model in a form of a Deep Neural Network (DNN). The neural network model may be a model in a form referred to as a convolution neural network (CNN), a recurrent neural network (RNN), or long short-term memory (LSTM), for example. Needless to say, the neural network model is not limited to these forms of models. For example, the neural network model may be a model in a form referred to as a transformer.

In CNN, a hidden layer includes individual layers each referred to as a convolution layer and a pooling layer. The convolution layer applies filtering by a convolution operation to extract data referred to as a feature map. The pooling layer compresses information of the feature map output from the convolution layer to implement down-sampling. CNN is used, for example, for image recognition, information regarding each picture element, also referred to as a pixel of an image, is input to an input layer, making it possible to obtain information related to the image recognized as an output layer.

The RNN has a network structure in which a value of the hidden layer is recursively input to the hidden layer, and processes short-period time-series data, for example.

In the LSTM, the influence of the far past output can be held by introducing a parameter referred to as a memory cell that holds the state of the intermediate layer into the intermediate layer output of the RNN. That is, the LSTM processes time-series data of a longer period than the RNN.

Needless to say, the learning model is not limited to a neural network model. For example, the learning model may be a model based on reinforcement learning. In reinforcement learning, the model is trained through trial and error to take an action (setting) that maximizes value. In addition, the learning model may be a logistic regression model.

Note that the learning model may include a plurality of models. For example, the learning model may include a plurality of neural network models. More specifically, the learning model may include a plurality of neural network models selected from CNN, RNN, and LSTM, for example. In a case where the learning model includes a plurality of neural network models, the plurality of neural network models may be in a dependent relationship or a parallel relationship.

The learning model (hereinafter, also denoted as a learning model M) of the present embodiment is, for example, a learning model (trained model) that has trained to learn past or current network quality information collected from the core network, as input data and/or a ground truth label (teaching data).

When the server 10 or the management apparatus 20 has input the past mobile network quality information (hereinafter, denoted as past network quality information) collected from the core network to the learning model M, the learning model outputs future mobile network quality information (hereinafter, denoted as future network quality information).

In this case, the learning model M may be a learning model that includes: an input layer that inputs past network quality information; an output layer that outputs future network quality information; a first element that belongs to any layer from the input layer to the output layer other than the output layer; and a second element having a value calculated based on the first element and the weight of the first element. The learning model M may be a learning model for causing a computer to function to output the future network quality information from the output layer in accordance with the past network quality information that has been input to the input layer by performing an operation based on the first element and the weight of the first element (that is, a connection coefficient) using each element belonging to each layer other than the output layer as the first element onto the information input to the input layer.

Here, it is assumed that the learning model M is implemented by a neural network having one or a plurality of intermediate layers such as a DNN. In this case, for example, the first element included in the learning model corresponds to any node of the input layer or the intermediate layer. In addition, the second element corresponds to a node at a next stage which is a node to which a value is transmitted from a node corresponding to the first element. In addition, the weight of the first element corresponds to a connection coefficient being a weight considered for a value transmitted from the node corresponding to the first element to the node corresponding to the second element.

In addition, the machine learning model M is assumed to be implemented by a regression model expressed by "y=a1*x1+a2*x2+···+ai*xi". In this case, for example, the first element included in the learning model M corresponds to input data (xi) such as x1, x2, etc. Furthermore, the weight of the first element corresponds to a coefficient ai corresponding to xi. Here, the regression model can be regarded as a simple perceptron having an input layer and an output layer. When each model is regarded as a simple perceptron, the first element can be regarded as any node included in the input layer, and the second element can be regarded as a node included in the output layer.

The server 10 or the management apparatus 20 calculates information to output using a model having any type of structure such as a neural network and a regression model. Specifically, for the learning model M, the coefficient is set such that, when past network quality information has been input, future network quality information will be output. For example, the server 10 or the management apparatus 20 sets the coefficient based on the similarity between the current network quality information and the value obtained by inputting the past network quality information to the learning model. The server 10 or the management apparatus 20 generates the future network quality information from the past network quality information using such a learning model M.

The above example has described as an example of the learning model M, a model that outputs future network quality information in response to the input of past network quality information. However, the learning model M according to the embodiment may be a model generated based on a result obtained by repeating input and output of data to and from the learning model. Here, the learning model M may be generated or updated by online learning. Furthermore, the learning model M may be generated or updated by mini-batch learning.

Furthermore, when the server 10 or the management apparatus 20 performs learning or generation of output information using a Generative Adversarial Network (GAN), the learning model may be a model constituting a part of the GAN.

Note that a training apparatus that trains the learning model M may be the server 10 or the management apparatus 20. Furthermore, the training apparatus may be another information processing apparatus (for example, the base station 30 or the terminal apparatus 40). For example, there is an assumable case where the server 10 trains the learning model M. In this case, the server 10 trains the learning model M and stores the trained learning model M in the storage unit. More specifically, the server 10 sets the connection coefficient of the learning model M such that the learning model outputs the future network quality information in response to the input of the past network quality information to the learning model M.

For example, the information processing apparatus (for example, the server 10, the management apparatus 20, the base station 30, or the terminal apparatus 40) inputs the past network quality information to the node of the input layer included in the learning model M, allows the data to propagate to the output layer of the learning model M through each intermediate layer so as to cause the learning model M to output the future network quality information. Subsequently, the information processing apparatus corrects the connection coefficient of the learning model M based on a difference between the value actually output by the learning model M and the value defined as the ground truth label (teaching data). At this time, the information processing apparatus may correct the connection coefficient using a method such as back propagation. At this time, the information processing apparatus may correct the connection coefficient based on a cosine similarity between a vector indicating the input value and a vector indicating the value actually output by the learning model.

The learning may use any learning algorithm. For example, the information processing apparatus may train the learning model by using a learning algorithm such as a neural network, a support vector machine, clustering, reinforcement learning, random forest, or a decision tree.

Although the method of generating the learning model M has been described above, the above implementation examples are also applicable to learning models other than the learning model M.

Furthermore, the learning algorithm used in the present embodiment may be used for the training performed by a single information processing apparatus (for example, the server 10, the management apparatus 20, the base station 30, or the terminal apparatus 40) alone, or may be used for the collaborative training performed by a plurality of information processing apparatuses (for example, a plurality of apparatuses selected from the server 10, the management apparatus 20, the base station 30, and the terminal apparatus 40). Here, an example of a learning algorithm used for the collaborative training performed by the plurality of information processing apparatuses is federated learning.

### <<3. Network architecture>>

The configuration of the communication system 1 has been described above. Next, a network architecture applicable to the communication system 1 of the present embodiment will be described. Here, an architecture of a fifth generation mobile communication system (5G) will be described as an example of a core network CN of the communication system 1.

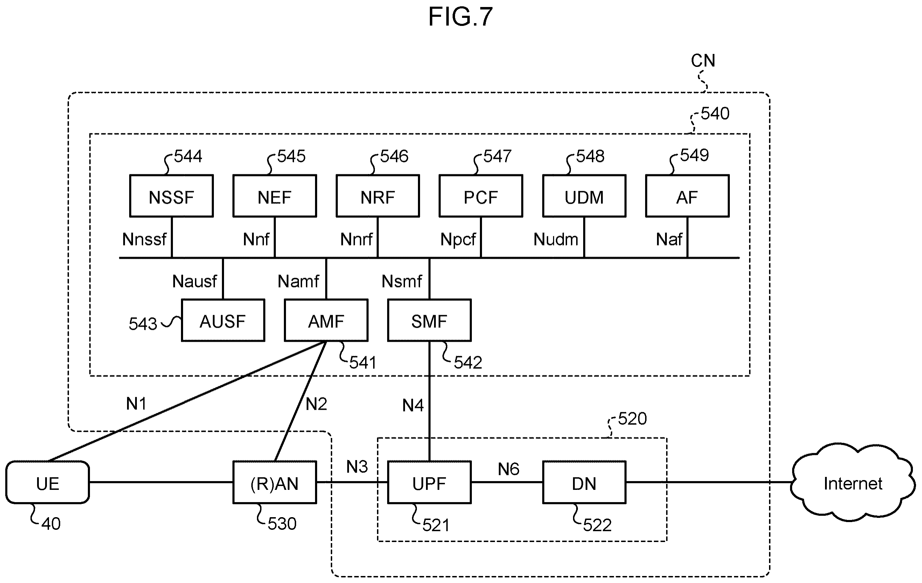

FIG. 7 is a diagram illustrating an example of 5G architecture. The core network CN of 5G is also referred to as 5G Core (5GC)/Next Generation Core (NGC). Hereinafter, the core network CN of 5G is also referred to as a 5GC/NGC. The core network CN is connected to User Equipment (UE) 40 via a (R)AN 530. An example of the UE 40 is the terminal apparatus 40.

Although the core network CN illustrated in FIG. 7 does not include a Localized Service Control Function (LSCF), but the core network CN may include the LSCF as one of the network functions. Needless to say, the LSCF may be a network function disposed outside the core network CN.

The (R)AN 530 has a function of enabling the connection to a radio access network (RAN) and the connection to an Access Network (AN) other than RAN. The (R)AN 530 includes a base station referred to as a gNB or an ng-eNB.

The core network CN mainly performs connection permission and session management when the UE 40 is connected to the network. The core network CN may include a user plane function group 520 and a control plane function group 540.

The user plane function group 520 includes a user plane function (UPF) 521 and a data network (DN) 522. The UPF 521 has a function of user plane processing. The UPF 521 includes a routing/transfer function of data handled in the user plane. The DN 522, including Mobile Network Operator (MNO), has a function of providing a connection to an operator's own service, a function of providing an Internet connection, or a function of providing a connection to a third party service. In this manner, the user plane function group 520 plays a role of a gateway to be a boundary between the core network CN and the Internet.

The control plane function group 540 includes an access management function (AMF) 541, a session management function (SMF) 542, an authentication server function (AUSF) 543, a network slice selection function (NSSF) 544, a network exposure function (NEF) 545, a network repository function (NRF) 546, a policy control function (PCF) 547, a unified data management (UDM) 548, and an application function (AF) 549.

The AMF 541 has functions such as registration processing, connection management, and mobility management regarding the UE 40. The SMF 542 has functions such as session management and IP allocation and management of the UE 40. The AUSF 543 has an authentication function. The NSSF 544 has a function related to selection of a network slice. The NEF 545 has a function of providing a capability and an event of a network function to a third party, the AF 549, or an edge computing function.

The NRF 546 has a function of discovering network functions and holding network function profiles. The PCF 547 has a function of policy control. The UDM 548 has functions of generating 3GPP AKA authentication information and user ID processing. The AF 549 has a function of providing a service in interaction with the core network.

For example, the control plane function group 540 acquires information from the UDM 548 storing subscriber information of the UE 40, and determines whether the UE 40 is permitted to connect to the network. In this determination, the control plane function group 540 uses the contract information of the UE 40 and an encryption key included in the information acquired from the UDM 548. In addition, the control plane function group 540 performs processing such as generation of the encryption key.

That is, the control plane function group 540 determines whether to permit network connection according to whether the UDM 548 stores information of the UE 40 associated with a subscriber number referred to as International Mobile Subscriber Identity (IMSI), for example. Note that the IMSI is stored in a Subscriber Identity Module (SIM) card in the UE 40, for example.

Here, Namf is a service-based interface provided by the AMF 541, and Nsmf is a service-based interface provided by the SMF 542. In addition, Nnef is a service-based interface provided by the NEF 545, and Npcf is a service-based interface provided by the PCF 547. Nudm is a service-based interface provided by the UDM 548, and Naf is a service-based interface provided by the AF 549. Nnrf is a service-based interface provided by the NRF 546, and Nnssf is a service-based interface provided by the NSSF 544. Nausf is a service-based interface provided by the AUSF 543. Each of these network functions (NFs) exchanges information with another NF via each service-based interface.

In FIG. 7, N1 is a reference point between the UE 40 and the AMF 541, while N2 is a reference point between the RAN/AN 530 and the AMF 541. N4 is a reference point between the SMF 542 and the UPF 521, and information is exchanged between these network functions (NFs).

As described above, the core network CN is provided with an interface used in transmitting information and controlling functions via an Application Programming Interface (API), referred to as service-based interface.

The API enables designation of a resource, and operations on the resource, such as GET (resource acquisition), POST (creation of resource and addition of data), PUT (create resource, update resource), and DELETE (resource deletion). Such a function is typically used in the technical field related to the Web, for example.

For example, the AMF 541, the SMF 542, and the UDM 548 illustrated in FIG. 7 exchange information with each other using the API when establishing a communication session. The application function (for example, AF 549) may be configured to be able to use such an API.

In the example of FIG. 7, the application function is included in the core network CN, but the application function may be included in a device (for example, the server 10) other than the device (for example, the management apparatus 20) constituting the core network CN.

### <<4. Operation of communication system>>

The network architecture has been described as above. Next, the operation of the communication system 1 will be described.

### <4-1. Outline of operation of communication system>

In the present embodiment, the communication system 1 is configured to allow a change in Quality of Service (QoS) settings from the terminal apparatus 40 to the application function. As described above, the application function may be included in the server 10 or may be included in the management apparatus 20.

Based on information collected from the core network, the application function (the server 10 or the management apparatus 20) creates future quality information of a mobile network (hereinafter, denoted as network quality prediction information). Subsequently, the application function discloses the network quality information (prediction information and/or current information) to the terminal apparatus 40.

The terminal apparatus 40 decides the QoS of the service based on the network quality information disclosed by the application function and the information related to the service desired to be used by the terminal apparatus 40 (user). Subsequently, the terminal apparatus 40 makes a QoS request to the application function.

### <4-2. Specific example of network quality information>

As described above, the application function discloses the prediction information of the network quality information to the terminal apparatus 40. The application function may disclose not only the prediction information but also the current information (information regarding the current quality of the mobile network) as the network quality information.

### <4-2-1. Network quality information to be disclosed>

The network quality information (prediction information and/or current information) disclosed by the application function may be at least one of the following (A1) to (A4), or may include at least one of the following (A1) to (A4).

### (A1) Traffic volume or band use rate

The network quality information disclosed by the application function may include information (prediction information) on a future traffic volume or band use rate of the mobile network. The network quality information disclosed by the application function may naturally include information (current information) regarding a current traffic volume or band use rate of the mobile network.

### (A2) Throughput

The network quality information disclosed by the application function may include information (prediction information) related to a throughput expected when the terminal apparatus 40 performs communication using the mobile network. At this time, the network quality information may include not only information regarding the throughput that can be used in the future by the terminal apparatus 40 itself that acquires the network quality information but also information regarding the throughput that can be used in the future by another terminal apparatus 40. The information related to throughput may include information related to a future communication resource use rate of the RAN (for example, the base station 30) to which the terminal apparatus 40 is connected. In addition, the network quality information may include information of a future throughput that can be allocated for each QoS setting. The network quality information disclosed by the application function may naturally include information (current information) related to the current throughput of the terminal apparatus 40.

### (A3) Jitter

The network quality information disclosed by the application function may include information (prediction information) related to a jitter expected when the terminal apparatus 40 performs communication using the mobile network. At this time, the information related to the jitter may include not only the information related to the jitter of the terminal apparatus 40 itself that acquires the network quality information but also the information related to the jitter of another terminal apparatus 40. The network quality information disclosed by the application function may naturally include information (current information) related to the current jitter of the terminal apparatus 40.

### (A4) Delay time (Latency)

The network quality information disclosed by the application function may include information (prediction information) related to a delay time expected when the terminal apparatus 40 performs communication using the mobile network. At this time, the information related to the delay time may include not only the information related to the delay time of the terminal apparatus 40 itself that acquires the network quality information but also the information related to the delay time of another terminal apparatus 40. The network quality information disclosed by the application function may naturally include information (current information) related to the current delay time of the terminal apparatus 40.

The network quality information disclosed by the application function may include information other than the above (for example, information defined in NEF/NWDAF). For example, the network quality information disclosed by the application function may include at least one of the following (A5) to (A17) in addition to at least one of the above (A1) to (A4).
(A5) UE location (location information of UE (terminal apparatus))
(A6) Reachability
(A7) Roaming status
(A8) Loss (rate) of connectivity
(A9) gNB status information (status information of base station (gNB))
(A10) Service Experience (e.g. Mean Objective Score (MOS))
(A11) Number of UEs (terminal apparatuses)
(A12) Reference Signal Received Power (RSRP)
(A13) Reference Signal Received Quality (RSRQ)
(A14) Signal-to-noise and interference ratio (SINR)
(A15) QoS flow bit rate
(A16) QoS flow Packet Delay
(A17) Packet retransmission

Note that (A5) to (A8) described above may be the same as information provided (exposed) to another network function (NF) by NEF. In addition to or in place of this, information of (A5) and (A9) to (A17) described above may be the same as information collected from another NF and/or provided (exposed) to another NF by the Network Data Analysis Function (NWDAF).

### <4-2-2. Statistical processing applied to network quality information>

The network quality information (prediction information and/or current information) disclosed by the application function may be information statistically processed (hereinafter, denoted as statistically processed information). For example, the application function may disclose information (value) obtained by statistically processing one or a plurality of pieces of information (values) selected from (A1) to (A17) described above as network quality information (statistically processed information). The statistically processed information may include one or a plurality of pieces of information selected from a maximum value, a minimum value, a mean value, a mode value, and a variance. In addition, the statistically processed information may include gradient information. This makes it possible to express a future transition status of network quality (for example, deterioration, improvement, no change), for example.

### <4-2-3. Prediction granularity>

The network quality information (prediction information and/or current information) disclosed by the application function may be information in units of predetermined time length. At this time, the application function may change the unit of prediction within a range of 1 second to 1 hour. For example, the application function may disclose the network quality information for every 1 second to the terminal apparatus 40, or may disclose the network quality information for every 1 hour to the terminal apparatus 40. Of course, the unit of prediction is not limited to the range of 1 second to 1 hour.

### <4-2-4. Others>

Furthermore, the application function (the server 10 or the management apparatus 20) may disclose the network quality information for each base station 30 as the network quality information. At this time, the terminal apparatus 40 may acquire quality prediction information related to the base station 30 to connect.

Furthermore, the prediction target of the application function (predictor) may be different between the private network and the public network.

For example, when the mobile network is a private network, the application function may acquire prediction information of quality of the entire network as future network quality information.

Furthermore, when the mobile network is a public network, the application function may acquire the prediction information of the quality in units of slices assigned to a specific service, as the future network quality information. When the mobile network is a public network, the application function may acquire the prediction information of the quality of the entire network, as the future network quality information.

### <4-3. Specific example of QoS>

The application function (the server 10 or the management apparatus 20) of the present embodiment is configured to change the QoS setting based on a QoS request from the terminal apparatus 40. Quality of Service (QoS) is, for example, quality of service using a mobile network. In the following description, the parameter of QoS or the setting of QoS may be simply denoted as QoS.

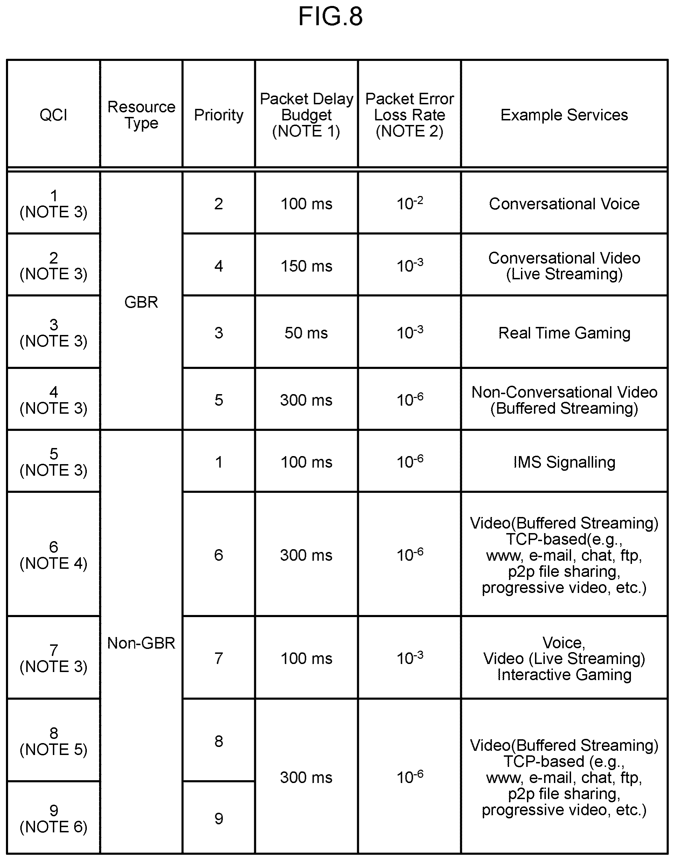

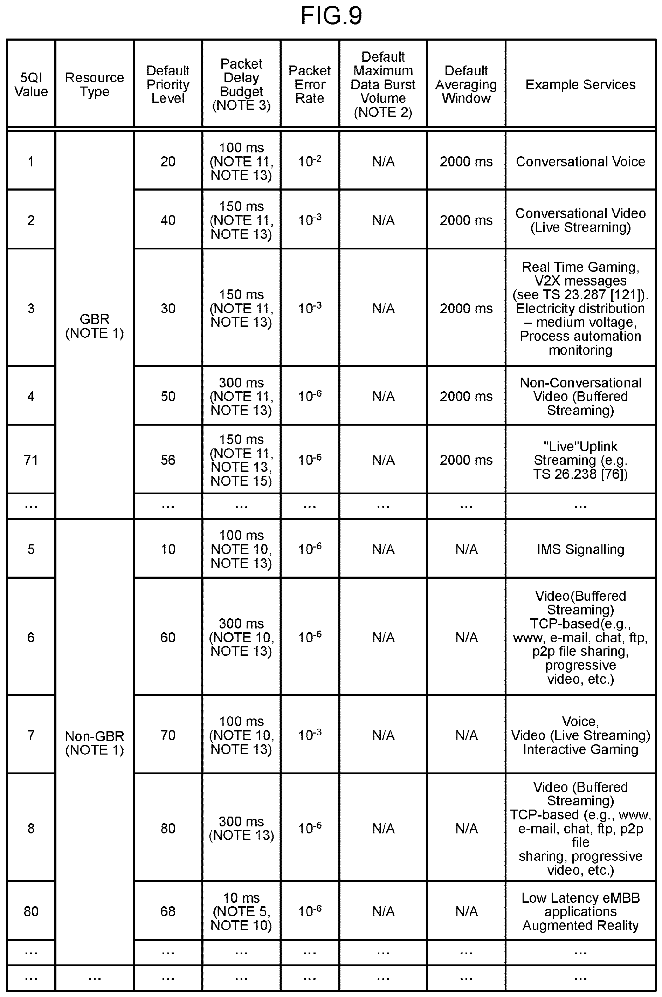

A specific example of QoS is QoS class identifier (QCI) defined in 3GPP TS 23.203. FIG. 8 is a diagram illustrating an example of QCI. Another specific example of QoS may be a 5G QoS Identifier (5QI) defined in 3GPP TS 23.501. FIG. 9 is a diagram illustrating an example of 5QI.

QoS is not limited to QCI or 5QI. QoS suitable for the service may be uniquely defined. For example, in a local 5G network environment including a camera that captures a video to be delivered to a viewer by video transmission or the like and other videos, only QoS corresponding to wired and non-priority may be defined. At that time, as an index of the service quality, a unique requirement such as a frame rate (for example, frames per second (fps)) with respect to the resolution of the video or a maximum video delay may be included.

### <4-4. Specific example of QoS decision method>

The terminal apparatus 40 decides the QoS of the service based on the network quality information disclosed by the application function (the server 10 or the management apparatus 20) and the information related to the service desired to be used by the terminal apparatus 40 (user). Hereinafter, specific examples of a QoS decision method will be described.

### (B1) Specific Example 1

The terminal apparatus 40 may acquire, as the network quality information, information related to a throughput expected when the terminal apparatus 40 performs communication with the current QoS setting. In addition, in a case where the expected throughput is less than the throughput required by the service, the terminal apparatus 40 may decide a QoS setting better than the current QoS setting as the QoS of the service. Here, the better QoS setting indicates a QoS setting that can achieve a communication quality improvement effect as compared with the case of the current QoS setting, such as an increase in throughput, a decrease in an allowable delay time, or a decrease in an allowable packet loss rate.

The terminal apparatus 40 may acquire information of QoS setting of another terminal apparatus 40 from the application function. In a case where the expected throughput is less than the throughput required in the previous service, the terminal apparatus 40 may decide a QoS setting better than the current QoS setting and a QoS setting better than the QoS settings of the another communication apparatus, as the QoS of the service.

In a case where the required throughput cannot be achieved even with the better QoS, the terminal apparatus 40 may repeat the operation of improving the QoS setting until the request is achieved.

### (B2) Specific Example 2

The information provided by the application function to the terminal apparatus 40 may include information regarding a future throughput that can be allocated for each QoS setting. That is, the information provided by the application function to the terminal apparatus 40 may include information constituted with: a plurality of QoS settings; and information regarding a future throughput that can be allocated and associated with each of the plurality of QoS settings. The terminal apparatus 40 may decide the QoS in consideration of the information as well as information of the throughput desired in use. For example, the terminal apparatus 40 may change the QoS so as to match the throughput desired in use. In a case where there is no QoS that satisfies the throughput desired in use, the terminal apparatus 40 may decide a QoS setting that can achieve the maximum throughput, as the QoS of the service.

### (B3) Specific Example 3

When the value of the throughput desired by the terminal apparatus 40 significantly decreases (for example, in a case where the value is less than a predetermined threshold), the terminal apparatus 40 may make a decision to reduce the QoS setting to the minimum.

### <4-5. Specific example of QoS notification method>

After deciding the QoS, the terminal apparatus 40 makes a QoS request to the application function (the server 10 or the management apparatus 20). The QoS request transmitted to the application function may be made in at least one of the following units (C1) to (C7).

### (C1) In units of UEs

The QoS setting transmitted by the terminal apparatus 40 to the application function may be a setting made in units of UE (for each terminal apparatus).

### (C2) In units of QoS Flows

The QoS setting transmitted by the terminal apparatus 40 to the application function may be a setting made in units of QoS flows.

### (C3) In units of slices

The QoS setting transmitted by the terminal apparatus 40 to the application function may be a setting made in units of network slices.

### (C4) In units of specific application service sessions

The QoS setting transmitted by the terminal apparatus 40 to the application function may be a setting made in units of specific application service sessions. For example, the terminal apparatus 40 may realize QoS control in units of sessions of an application service by performing the QoS request in units of IP addresses or in units of ports.

### (C5) In units of time intervals

The QoS setting transmitted by the terminal apparatus 40 to the application function may be a setting made in units of time intervals. For example, the terminal apparatus 40 may change the QoS setting at regular time intervals.

### (C6) In units of data types

The QoS setting transmitted by the terminal apparatus 40 to the application function may be a setting in units of data types.

### (C7) In units of data transmission directions

The QoS setting transmitted by the terminal apparatus 40 to the application function may be a setting made in units of data transmission directions. For example, at the time of video transmission, the terminal apparatus 40 sets high QoS in the transmission direction and sets low QoS in the return direction for confirmation.

### <4-6. Communication processing>

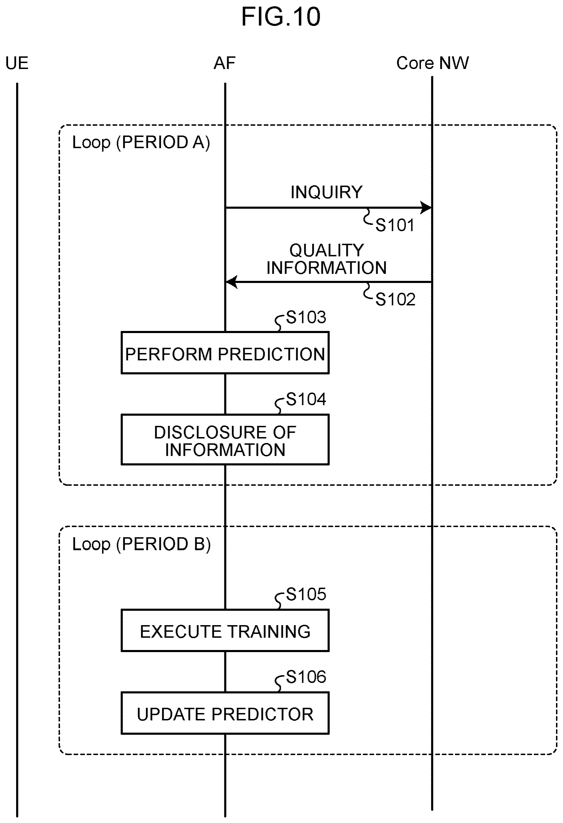

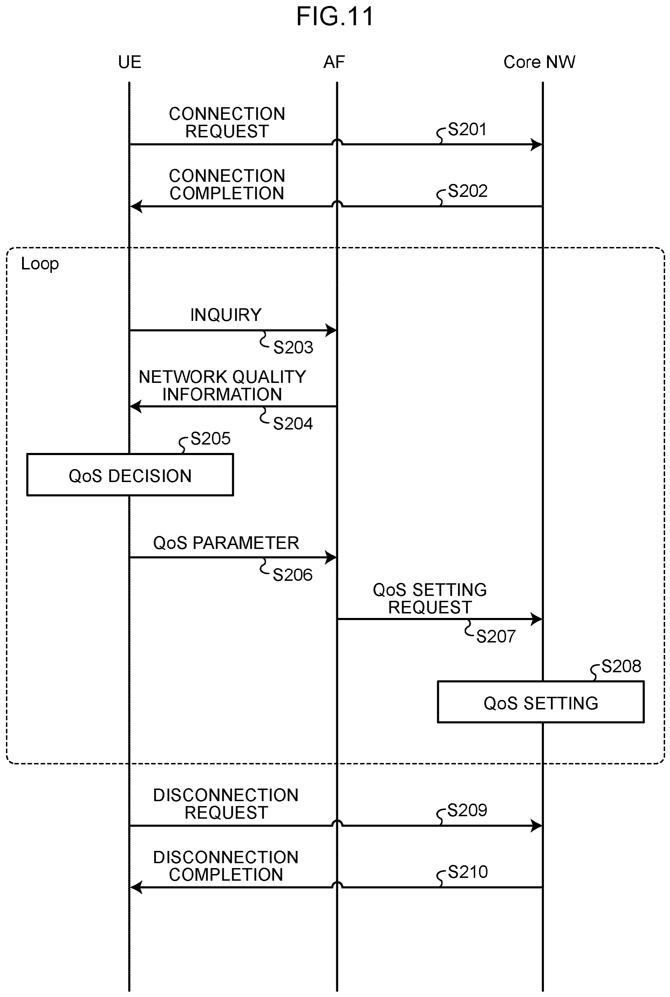

Based on the above, communication processing executed by the communication system 1 of the present embodiment will be described. FIGS. 10 and 11 are sequence diagrams illustrating communication processing according to the present embodiment. Specifically, FIG. 10 is a sequence diagram illustrating network quality information disclosure processing and predictor update processing. FIG. 11 is a sequence diagram illustrating QoS setting processing.

### <4-6-1. Network quality information disclosure processing and predictor update processing>

First, the network quality information disclosure processing and the predictor update processing will be described.

The network quality information disclosure processing and the predictor update processing are executed by the application function and the core network. In the following description, the application function is supposed to be included in the server 10, and the function of the core network is supposed to be included in the management apparatus 20.

The application function may be included in the management apparatus 20. In this case, the server 10 and the control unit 13 (the communication control unit 131 to the training unit 135) in the following description can be replaced with the management apparatus 20 and the control unit 23 (the communication control unit 231 to the training unit 235) as appropriate.

The network quality information disclosure processing and the predictor update processing are repeatedly executed at a predetermined period. Period A at which the network quality information disclosure processing is executed is shorter than period B at which the predictor update processing is executed. For example, period A is 1 minute, while period B is 24 hours.

Hereinafter, the network quality information disclosure processing and the predictor update processing will be described with reference to the sequence diagram of FIG. 10. In the example of FIG. 10, the control unit 13 (the prediction unit 134 and the training unit 135) of the server 10 functions as the application function, while the control unit 23 of the management apparatus 20 functions as the core network.

### (Network quality information disclosure processing)

First, the network quality information disclosure processing will be described. The network quality information disclosure processing is repeatedly executed at period A (for example, 1-minute period) shorter than period B for executing the predictor update processing.

The application function (the prediction unit 134 of the server 10) inquires of the core network (the control unit 23 of the management apparatus 20) about past or current network quality information (step S101). Here, the network quality information may be network quality information of each of the plurality of base stations 30 connected to the core network. The core network (the transmission unit 232 of the management apparatus 20) transmits past or current network quality information to the application function. The application function (the prediction unit 134 of the server 10) receives the past or current network quality information (step S102).

Subsequently, the application function (the prediction unit 134 of the server 10) inputs past or current network quality information to the predictor to predict future network quality information (step S103). Subsequently, the application function (the prediction unit 134 of the server 10) discloses the future network quality information to the terminal apparatus 40 (step S104).

### (Predictor update processing)

Next, the predictor update processing will be described. The predictor update processing is repeatedly executed in period B (for example, 24-hour period) longer than period A of for executing the network quality information disclosure processing.

The application function (the training unit 135 of the server 10) executes training of the predictor (learning model) based on the past or current network quality information (step S105). Subsequently, the application function updates the predictor to a new predictor (learning model) (step S106).

### <4-6-2. QoS setting processing>

Next, QoS setting processing will be described.

The QoS setting processing is executed by the UE, the application function, and the core network. In the following description, the UE is supposed to be the terminal apparatus 40. Additionally, in the following description, the application function is supposed to be included in the server 10, and the function of the core network is supposed to be included in the management apparatus 20.

The application function may be included in the management apparatus 20. In this case, the control unit 13 of the server 10 (or the communication control unit 131 to the training unit 135) in the following description can be replaced with the control unit 23 of the management apparatus 20 (or the communication control unit 231 to the training unit 235) as appropriate.

Hereinafter, the QoS setting processing will be described with reference to the sequence diagram of FIG. 11. In the example of FIG. 11, the control unit 13 (the prediction unit 134 and the training unit 135) of the server 10 functions as the application function, while the control unit 23 of the management apparatus 20 functions as the core network.

Having entered a support area of the mobile network (the private network and/or the public network), the communication control unit 431 of the terminal apparatus 40 sends to the core network (the control unit 23 of the management apparatus 20) a request for connecting to the mobile network (step S201). When the connection processing is completed, the core network (the transmission unit 232 of the management apparatus 20) notifies the terminal apparatus 40 of connection completion (step S202).

Subsequently, the communication control unit 431 of the terminal apparatus 40 establishes a session in the application layer with the information processing apparatus (the server 10 in the example of FIG. 11) that functions as the application function. Subsequently, the transmission unit 434 of the terminal apparatus 40 inquires of the application function (the control unit 13 of the server 10) about network quality information of the currently connected base station 30 (step S203). The application function (transmission unit 132 of server 10) transmits the network quality information to the terminal apparatus 40. Here, the network quality information may include not only future network quality information but also current network quality information. The acquisition unit 432 of the terminal apparatus 40 receives the network quality information from the application function (step S204).

Based on the network quality information acquired from the application function and the information related to the service desired to be used by the terminal apparatus 40 (user), the decision unit 433 of the terminal apparatus 40 decides an optimal QoS parameter (step S205). Subsequently, the transmission unit 434 of the terminal apparatus 40 transmits a QoS request (QoS parameter) to the application function. The application function (the reception unit 133 of the server 10) receives the QoS request from the terminal apparatus 40 (step S206).

The application function (the transmission unit 132 of the server 10) transmits a QoS setting request to the core network. For example, the application function transmits a QoS flow setting request to the core network. The core network (the reception unit 233 of the management apparatus 20) receives the QoS setting request from the application function (step S207). Based on the received QoS setting request, the core network (the communication control unit 231 of the management apparatus 20) performs OoS setting (step S208).

The terminal apparatus 40, the application function, and the core network repeat the processing of steps S203 to S208 at a predetermined timing.

Having moved away from the support area of the mobile network (the private network and/or the public network), the communication control unit 431 of the terminal apparatus 40 makes a disconnection request to the core network (the control unit 23 of the management apparatus 20) (step S209). When the disconnection processing is completed, the core network (the transmission unit 232 of the management apparatus 20) notifies the terminal apparatus 40 of disconnection completion (step S210).

### <<5. Modification>>

The above-described embodiment is an example, and various modifications and applications are possible.

### <5-1. First modification>

In the above-described embodiment, the application function (the server 10 or the management apparatus 20) trains the predictor (learning model) based on the information collected from the core network. However, the application function may train the predictor (learning model) based on the information collected from the terminal apparatus 40.

For example, the application function may collect, from the terminal apparatus 40, information related to wireless communication performed by the terminal apparatus 40 using the mobile network, such as terminal information and traffic information. Subsequently, the application function may train the predictor (learning model) based on the collected information. The application function may naturally train the predictor (learning model) using the information collected from the core network in addition to the information collected from the terminal apparatus 40. This makes it possible to improve the prediction accuracy of the predictor.

The application function may perform QoS control or traffic control using the prediction result of the predictor (learning model) created in this manner. For example, when stable communication is predicted, the application function may cause a mobile network (the management apparatus 20, the base station 30, or the terminal apparatus 40) to change a retransmission control algorithm or suppress retransmission. Furthermore, the application function may disclose the prediction result (future network quality information of the terminal apparatus 40) to the terminal apparatus 40. This makes it possible for the communication system 1 to achieve high communication performance.

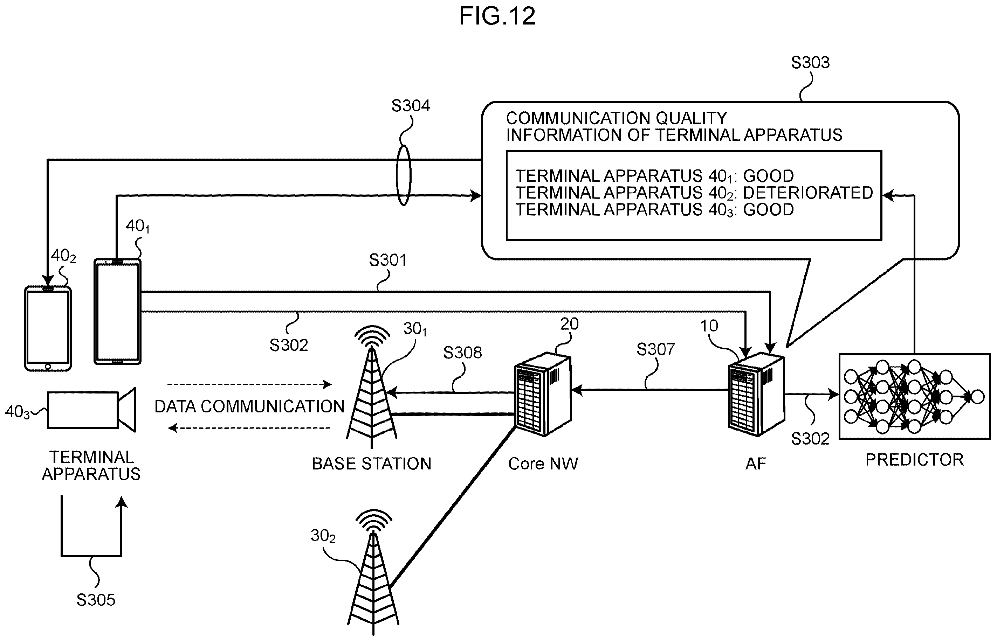

FIG. 12 is a diagram for illustrating operation of the communication system 1 according to the first modification. While the example of FIG. 12 assumes that the server 10 includes an application function, the management apparatus 20 may include an application function.

First, the application function acquires information related to wireless communication from the terminal apparatus 40 (step S301). At this time, the application function may also acquire information from the core network. Subsequently, based on the collected information, the application function creates a predictor that predicts future network quality information (step S302). The predictor is a learning model, for example.

The application function predicts future network quality information by using a predictor. Subsequently, the application function discloses the network quality information predicted by the predictor to the terminal apparatus (step S303). In the example of FIG. 12, the application function discloses the future communication quality of the terminal apparatus 40 as the network quality information.

The terminal apparatus 40 acquires the network quality information via the API for example (step S304). Subsequently, based on the acquired network quality information and information of a service desired to be used, the terminal apparatus 40 decides QoS to be requested (step S305). Subsequently, the terminal apparatus 40 notifies the decided QoS to the application function via the mobile network (step S306).

Based on QoS information requested from the terminal apparatus 40, the application function decides a QoS flow setting request for the core network. Subsequently, the application function transmits the QoS flow setting request to the core network (step S307). The core network controls the base station 30 based on the QoS flow setting (step S308).

According to the first modification, the predictor is trained based on the information collected from the terminal apparatus 40, making it possible to improve the prediction accuracy of the predictor. In addition, since QoS is decided based on the prediction result of the predictor created in this manner, the communication system 1 can achieve high communication performance.

### <5-2. Second modification>

In the above-described embodiment, the terminal apparatus 40 connected to the mobile network performs QoS request to the application function (the server 10 or the management apparatus 20). However, the terminal apparatus 40 (hereinafter, also denoted as another terminal apparatus 40) connected to the mobile network may perform the QoS request.

For example, here is an assumable case where another terminal apparatus 40 (for example, a camera) is connected, via connection such as Ethernet tethering and Wi-Fi tethering, to the terminal apparatus 40 connected to the mobile network. In addition, the user is supposed to have set the image quality of the video to be transmitted or received using the touch panel of the another terminal apparatus 40. In this case, the another terminal apparatus 40 may request the QoS setting associated with the setting (image quality) to the application function via the terminal apparatus 40. Note that the calculation of the appropriate QoS setting for the setting may be performed not by the another terminal apparatus 40 but by the terminal apparatus 40 connected to the mobile network.

Furthermore, the terminal apparatus 40 connected to the mobile network may transmit, to the application function, a QoS request related to the another terminal apparatus 40 connected to the mobile network. For example, it is assumed that a terminal apparatus 40₁ and a terminal apparatus 40₂ are connected to a mobile network. In this case, the terminal apparatus 40₁ may transmit a request for changing the QoS setting related to the terminal apparatus 40₂, to the application function.

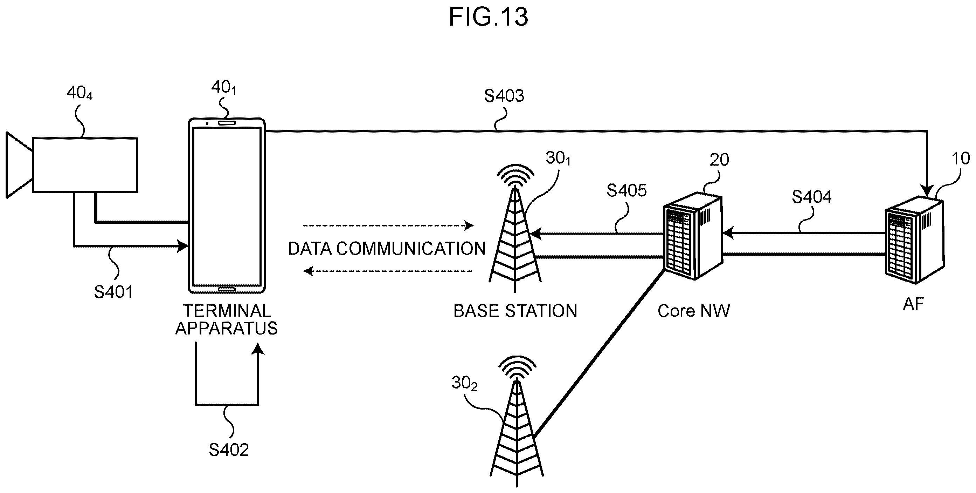

FIG. 13 is a diagram for illustrating the operation of the communication system 1 according to a second modification. While the example of FIG. 13 assumes that the server 10 includes an application function, the management apparatus 20 may include an application function. Furthermore, in the example of FIG. 13, the terminal apparatus 40₁ is connected to a mobile network, while a terminal apparatus 40₄ is connected to the terminal apparatus 40₁.

First, the terminal apparatus 40₄ transmits QoS information to be requested associated with the usage status to the terminal apparatus 40₁ (step S401). The terminal apparatus 40₁ decides a QoS request to be transmitted to the application function (step S402). At this time, the terminal apparatus 40₁ may directly use the QoS information received from the terminal apparatus 40₄ as the QoS request. Subsequently, the terminal apparatus 40₁ notifies the decided QoS to the application function via the mobile network (step S403).

Based on QoS information requested from the terminal apparatus 40₁, the application function decides a QoS flow setting request for the core network. Subsequently, the application function transmits the QoS flow setting request to the core network (step S404). The core network controls the base station 30 based on the QoS flow setting (step S405).

According to the second modification, the mobile network is controlled based on the QoS request of another terminal apparatus 40 connected to the terminal apparatus 40, making it possible for the communication system 1 to realize communication with high communication performance in consideration of the request of the another terminal apparatus 40.

### <5-3. Third modification>

In the above-described embodiment, the application function (the server 10 or the management apparatus 20) performs QoS setting in the core network based on the QoS request from the terminal apparatus 40. However, the application function may reject the QoS request from the terminal apparatus 40 in accordance with a predetermined criterion. For example, the application function may reject the QoS request from the terminal apparatus 40 when it is judged that receiving the QoS request from the terminal apparatus 40 will cause the mobile network to exceed its capacity. In this case, the application function may notify the terminal apparatus 40 of rejection of the request (hereinafter, referred to as rejection notification).

At this time, the application function may notify information related to the QoS setting with which the request is acceptable (for example, a maximum QoS setting with which the request is acceptable) together with the rejection notification. The terminal apparatus 40 may re-decide the QoS setting based on the information related to the QoS setting with which the request is acceptable.

In addition, the application function may assign priority to the connected terminal apparatus 40 in order to respond to an emergency call or a desire to give priority to a specific terminal apparatus 40. The application function may respond to the QoS request in order from higher priority. The priority may be decided in advance or may be dynamically changed. For example, an administrator of the mobile network may decide the priority in an auction format. Subsequently, the application function may perform QoS control with priority given to the terminal apparatus 40 of the user presenting a higher bid price.

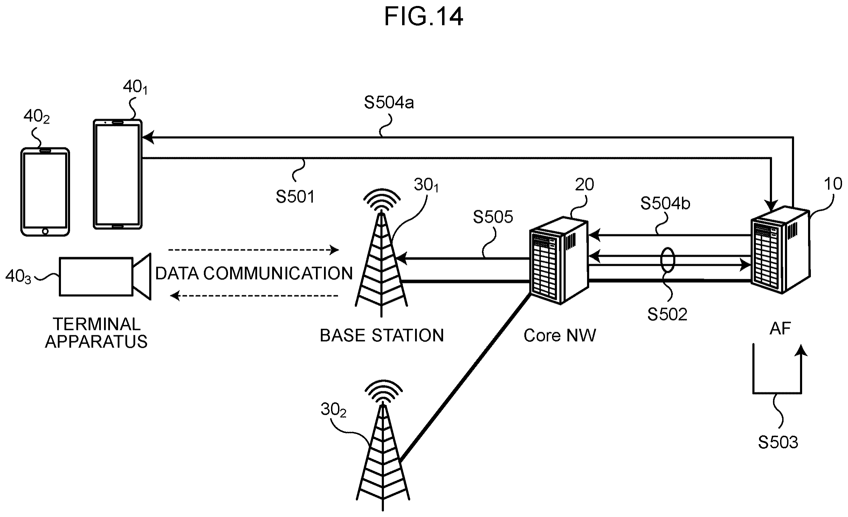

FIG. 14 is a diagram for illustrating the operation of the communication system 1 according to a third modification. While the example of FIG. 14 assumes that the server 10 includes an application function, the management apparatus 20 may include an application function.

First, the terminal apparatus 40 notifies the application function of the decided QoS via the mobile network (step S501). Note that the terminal apparatus 40 may transmit the priority to the application function together with the QoS request. The priority may be assigned from an administrator (for example, an operator of a mobile network) of the communication system 1 to the terminal apparatus 40, or may be self-decided by the terminal apparatus 40 according to the importance of the communication data/service.

The application function acquires information related to the mobile network (for example, information of the network capacity and priority information of each terminal apparatus 40) from the core network (step S502). Subsequently, the application function discerns whether to make a QoS setting request to the core network based on the information acquired from the core network and the QoS request from the terminal apparatus 40 (step S503).

In a case where it is discerned that the QoS setting request is not to be made, the application function notifies the terminal apparatus 40 that the QoS request has been rejected (step S504a). In contrast, when it is discerned that the QoS setting request is to be made, the application function transmits a QoS setting request to the core network (step S504b). The core network controls the base station 30 based on the QoS flow setting (step S505).

According to the third modification, the application function can reject an excessive QoS change request from the terminal apparatus 40. As a result, the communication system 1 can achieve high communication performance as a whole system.

### <5-4. Variations of UE operation in response to network prediction result>

In the above-described embodiment, the terminal apparatus 40 makes a QoS request to the application function based on future network quality information. However, the operation of the terminal apparatus 40 made upon receiving the future network quality information is not limited to this example. A variation of the operation of the terminal apparatus 40 may be at least one of the following items (D1) to (D5) or may include at least one of the following items (D1) to (D5).

(D1) The terminal apparatus 40 may suspend the use of the mobile network when the quality of the future mobile network does not satisfy a predetermined criterion.

(D2) The terminal apparatus 40 may switch a network to be used from the mobile network to another network (for example, Wi-Fi) when the quality of the future mobile network does not satisfy the predetermined criterion.

(D3) The terminal apparatus 40 may cause the core network to change the QoS value when the quality of the future mobile network does not satisfy the predetermined criterion. For example, the terminal apparatus 40 may change the QoS to a QoS with a high priority of resource allocation.

(D4) When the quality of the future mobile network does not satisfy the predetermined criterion, the terminal apparatus 40 may cause the core network and/or the base station 30 to change the retransmission algorithm via the application function. For example, the terminal apparatus 40 may have the RRC parameter changed, may have link adaptation or duplication applied.

(D5) The terminal apparatus 40 may perform adjustment inside the terminal apparatus 40 when the quality of the future mobile network does not satisfy the predetermined criterion. For example, the terminal apparatus 40 may decrease the rate of an application, perform Dual SIM Dual Active (DSDA), use a wireless LAN simultaneously, or perform MultiPath TCP (MPTCP).

### <5-5. Other modifications>

A control apparatus that controls the server 10, the management apparatus 20, the base station 30, and the terminal apparatus 40 of the present embodiment may be actualized by a dedicated computer system or a general-purpose computer system.

For example, a communication program for executing the above-described operations is stored in a computer-readable recording medium such as an optical disk, semiconductor memory, a magnetic tape, or a flexible disk and distributed. For example, the program is installed on a computer and the above processing is executed to achieve the composition of the control apparatus. At this time, the control apparatus may be an apparatus (for example, a personal computer) external to the server 10, the management apparatus 20, the base station 30, and the terminal apparatus 40. Furthermore, the control apparatus may be an apparatus (for example, the control unit 13, the control unit 23, the control unit 33, and the control unit 43) inside the server 10, the management apparatus 20, the base station 30, or the terminal apparatus 40.

Furthermore, the communication program can be stored in a disk device included in a server on a network such as the Internet so as to be able to be downloaded to a computer, for example. Furthermore, the functions described above may be realized by using operating system (OS) and application software in cooperation. In this case, the portions other than the OS may be stored in a medium for distribution, or the portions other than the OS may be stored in a server so as to be downloaded to a computer, for example.

Furthermore, among individual processing described in the above embodiments, all or a part of the processing described as being performed automatically may be manually performed, or the processing described as being performed manually can be performed automatically by known methods. In addition, the processing procedures, specific names, and information including various data and parameters illustrated in the above Literatures or drawings can be flexibly altered unless otherwise specified. For example, various types of information illustrated in each of the drawings are not limited to the information illustrated.

In addition, each of components of each device is provided as a functional and conceptional illustration and thus does not necessarily need to be physically constituted as illustrated. That is, the specific mode of distribution/integration of each of the devices is not limited to those illustrated in the drawings, and all or a part thereof may be functionally or physically distributed or integrated into arbitrarily chosen units in accordance with various loads and use status. This composition by distribution and integration may be performed dynamically.

Furthermore, the above-described embodiments can be appropriately combined within a range implementable without contradiction of processing. Furthermore, the order of individual steps illustrated in the flowchart or the sequence of the above-described embodiment can be altered as appropriate.

Furthermore, for example, the present embodiment can be implemented as any configuration constituting an apparatus or a system, for example, a processor as a large scale integration (LSI) or the like, a module using a plurality of processors or the like, a unit using a plurality of modules or the like, and a set obtained by further adding other functions to the unit, or the like (that is, a configuration of a part of the apparatus).

In the present embodiment, a system represents a set of a plurality of components (devices, modules (parts), or the like), and whether all the components are in the same housing would not be a big issue. Therefore, a plurality of devices housed in separate housings and connected via a network, and one device in which a plurality of modules are housed in one housing, are both systems.

Furthermore, for example, the present embodiment can adopt a composition of cloud computing in which one function is cooperatively shared and processed by a plurality of devices or devices via a network.

### <<6. Conclusion>>

As described above, according to one embodiment of the present disclosure, the application function (the server 10 or the management apparatus 20) creates future network quality information of a mobile network based on information collected from the core network. The application function discloses the network quality information to the terminal apparatus 40. The terminal apparatus 40 decides the QoS of the service based on the network quality information disclosed by the application function and the information related to the service desired to be used by the terminal apparatus 40 (user). Subsequently, the terminal apparatus 40 makes a QoS request to the application function.

In this manner, in the present embodiment, the terminal apparatus 40 issues a QoS request to the application function, making it possible for the application function to perform optimal network control in consideration of the needs of the terminal apparatus 40. In addition, in the present embodiment, the application function discloses network quality information to the terminal apparatus 40. The terminal apparatus 40 decides the QoS request based on the network quality information disclosed. This makes it possible, as a result, to prevent the terminal apparatus 40 from making a QoS request exceeding the capacity of the mobile network.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

The effects described in individual embodiments of the present specification are merely examples, and thus, there may be other effects, not limited to the exemplified effects.

Note that the present technology can also have the following configurations.
(1) A communication apparatus that functions as a user apparatus in a mobile network including a core network, the communication apparatus comprising:
   a communication control unit configured to establish a session in an application layer with an information processing apparatus capable of controlling the mobile network via a function of the core network;
   an acquisition unit configured to acquire quality information related to communication using the mobile network, from the information processing apparatus in the session;
   a decision unit configured to decide Quality of Service (QoS) regarding a service desired to be used by the communication apparatus, based on the quality information acquired and information related to the service; and
   a transmission unit configured to transmit a request for the QoS to the information processing apparatus.
(2) The communication apparatus according to (1), wherein
   the quality information includes information related to future quality of the mobile network.
(3) The communication apparatus according to (2), wherein
   the quality information includes prediction information of a future traffic volume or a band use rate of the mobile network.
(4) The communication apparatus according to (2) or (3), wherein
   the quality information includes information related to a throughput, jitter, or a delay time expected when the communication apparatus performs communication using the mobile network.
(5) The communication apparatus according to any one of (2) to (4), wherein
   the quality information includes information related to a throughput, jitter, or a delay time expected when another communication apparatus performs communication using the mobile network.
(6) The communication apparatus according to any one of (2) to (5), wherein
   the quality information includes statistically processed information of prediction information related to the quality of the mobile network.
(7) The communication apparatus according to any one of (2) to (6), wherein
   the quality information includes prediction information for each predetermined time unit, related to the quality of the mobile network.
(8) The communication apparatus according to any one of (2) to (7), wherein
   the quality information includes information related to the quality of the mobile network for each base station, and
   the acquisition unit acquires, as the quality information, prediction information of quality related to a base station to which the communication apparatus is connected.
(9) The communication apparatus according to any one of (2) to (8), wherein
   the mobile network includes a private network, and
   the acquisition unit acquires, as the quality information, prediction information of quality of an entire part of the private network.
(10) The communication apparatus according to any one of (2) to (9), wherein
   the mobile network includes a public network, and
   the acquisition unit acquires, as the quality information, prediction information of quality of a slice allocated to the service.
(11) The communication apparatus according to any one of (2) to (10), wherein
   the acquisition unit acquires, as the quality information, information related to a throughput expected when the communication apparatus performs communication with a current QoS setting, and
   the decision unit decides a QoS setting better than the current QoS setting as QoS of the service when the expected throughput is less than a throughput required by the service.
(12) The communication apparatus according to (11), wherein
   the acquisition unit acquires information related to QoS setting of another communication apparatus, and
   the decision unit decides a QoS setting better than the current QoS setting and a QoS setting better than the QoS setting of the another communication apparatus as the QoS of the service when the expected throughput is less than a throughput required by the service.
(13) The communication apparatus according to any one of (1) to (12), wherein
   the QoS request transmitted to the information processing apparatus is a request made in units including units of communication apparatuses, units of QoS flows, units of slices, units of specific application service sessions, units of time intervals, units of data classifications, or units of data transmission directions.
(14) The communication apparatus according to any one of (1) to (13), wherein
   the information processing apparatus includes a learning model for predicting future communication quality of the communication apparatus, and
   the transmission unit transmits, to the information processing apparatus, information for training the learning model, the information being related to communication performed by the communication apparatus using the mobile network.
(15) The communication apparatus according to any one of (1) to (14), wherein
   the transmission unit transmits a QoS request from another communication apparatus connected to the communication apparatus to the information processing apparatus.
(16) The communication apparatus according to any one of (1) to (15), wherein
   the information processing apparatus is configured to be able to reject the QoS request from the communication apparatus,
   the acquisition unit acquires information related to a QoS setting with which the QoS request is acceptable, and
   the decision unit decides QoS of the service based on the information related to the QoS setting.
(17) The communication apparatus according to any one of (1) to (16), wherein
   the information processing apparatus is configured to respond to the QoS request from the communication apparatus based on priority, and
   the transmission unit transmits the QoS request to the information processing apparatus together with information regarding the priority.
(18) An information processing apparatus that is capable of controlling a mobile network including a core network via a function of the core network, the information processing apparatus comprising:
   a communication control unit configured to establish a session in an application layer with a communication apparatus that functions as a user apparatus in the mobile network;
   a transmission unit configured to transmit network quality information of the mobile network to the communication apparatus in the session;
   a reception unit configured to receive, from the communication apparatus, a request for Quality of Service (QoS) of a service desired to be used by the communication apparatus, the QoS having been decided based on the acquired network quality information and information related to the service; and
   a network control unit configured to control the mobile network based on the QoS request.
(19) A communication method executed by a communication apparatus that functions as a user apparatus in a mobile network including a core network, the communication method comprising:
   establishing a session in an application layer with an information processing apparatus capable of controlling the mobile network via a function of the core network;
   acquiring network quality information regarding the mobile network from the information processing apparatus in the session;
   deciding Quality of Service (QoS) regarding a service desired to be used by the communication apparatus, based on the network quality information acquired and information related to the service; and
   transmitting a request for the QoS to the information processing apparatus.
(20) An information processing method executed by an information processing apparatus that is capable of controlling a mobile network including a core network via a function of the core network, the information processing method comprising:
   establishing a session in an application layer with a communication apparatus that functions as a user apparatus in the mobile network;
   transmitting network quality information of the mobile network to the communication apparatus in the session;
   receiving, from the communication apparatus, a request for Quality of Service (QoS) of a service desired to be used by the communication apparatus, the QoS having been decided based on the acquired network quality information and information related to the service; and
   controlling the mobile network based on the QoS request.

### Reference Signs List

1 COMMUNICATION SYSTEM
10 SERVER
20 MANAGEMENT APPARATUS
30 BASE STATION
40 TERMINAL APPARATUS
11, 21 COMMUNICATION UNIT
12, 22, 32, 42 STORAGE UNIT
13, 23, 33, 43 CONTROL UNIT
31, 41 WIRELESS COMMUNICATION UNIT
311, 411 TRANSMISSION PROCESSING UNIT
312, 412 RECEPTION PROCESSING UNIT
313, 413 ANTENNA
131, 231, 431 COMMUNICATION CONTROL UNIT
132, 232, 434 TRANSMISSION UNIT
133, 233, 435 RECEPTION UNIT
134, 234 PREDICTION UNIT
135, 235 TRAINING UNIT
432 ACQUISITION UNIT
433 DECISION UNIT

## Claims

1. A communication apparatus that functions as a user apparatus in a mobile network including a core network, the communication apparatus comprising:
a communication control unit configured to establish a session in an application layer with an information processing apparatus capable of controlling the mobile network via a function of the core network;
an acquisition unit configured to acquire quality information related to communication using the mobile network, from the information processing apparatus in the session;
a decision unit configured to decide Quality of Service (QoS) regarding a service desired to be used by the communication apparatus, based on the quality information acquired and information related to the service; and
a transmission unit configured to transmit a request for the QoS to the information processing apparatus.

2. The communication apparatus according to claim 1, wherein
the quality information includes information related to future quality of the mobile network.

3. The communication apparatus according to claim 2, wherein
the quality information includes prediction information of a future traffic volume or a band use rate of the mobile network.

4. The communication apparatus according to claim 2, wherein
the quality information includes information related to a throughput, jitter, or a delay time expected when the communication apparatus performs communication using the mobile network.

5. The communication apparatus according to claim 2, wherein
the quality information includes information related to a throughput, jitter, or a delay time expected when another communication apparatus performs communication using the mobile network.

6. The communication apparatus according to claim 2, wherein
the quality information includes statistically processed information of prediction information related to the quality of the mobile network.

7. The communication apparatus according to claim 2, wherein
the quality information includes prediction information for each predetermined time unit, related to the quality of the mobile network.

8. The communication apparatus according to claim 2, wherein
the quality information includes information related to the quality of the mobile network for each base station, and
the acquisition unit acquires, as the quality information, prediction information of quality related to a base station to which the communication apparatus is connected.

9. The communication apparatus according to claim 2, wherein
the mobile network includes a private network, and
the acquisition unit acquires, as the quality information, prediction information of quality of an entire part of the private network.

10. The communication apparatus according to claim 2, wherein
the mobile network includes a public network, and
the acquisition unit acquires, as the quality information, prediction information of quality of a slice allocated to the service.

11. The communication apparatus according to claim 2, wherein
the acquisition unit acquires, as the quality information, information related to a throughput expected when the communication apparatus performs communication with a current QoS setting, and
the decision unit decides a QoS setting better than the current QoS setting as QoS of the service when the expected throughput is less than a throughput required by the service.

12. The communication apparatus according to claim 11, wherein
the acquisition unit acquires information related to QoS setting of another communication apparatus, and
the decision unit decides a QoS setting better than the current QoS setting and a QoS setting better than the QoS setting of the another communication apparatus as the QoS of the service when the expected throughput is less than a throughput required by the service.

13. The communication apparatus according to claim 1, wherein
the QoS request transmitted to the information processing apparatus is a request made in units including units of communication apparatuses, units of QoS flows, units of slices, units of specific application service sessions, units of time intervals, units of data classifications, or units of data transmission directions.

14. The communication apparatus according to claim 1, wherein
the information processing apparatus includes a learning model for predicting future communication quality of the communication apparatus, and
the transmission unit transmits, to the information processing apparatus, information for training the learning model, the information being related to communication performed by the communication apparatus using the mobile network.

15. The communication apparatus according to claim 1, wherein
the transmission unit transmits a QoS request from another communication apparatus connected to the communication apparatus to the information processing apparatus.

16. The communication apparatus according to claim 1, wherein
the information processing apparatus is configured to be able to reject the QoS request from the communication apparatus,
the acquisition unit acquires information related to a QoS setting with which the QoS request is acceptable, and
the decision unit decides QoS of the service based on the information related to the QoS setting.

17. The communication apparatus according to claim 1, wherein
the information processing apparatus is configured to respond to the QoS request from the communication apparatus based on priority, and
the transmission unit transmits the QoS request to the information processing apparatus together with information regarding the priority.

18. An information processing apparatus that is capable of controlling a mobile network including a core network via a function of the core network, the information processing apparatus comprising:
a communication control unit configured to establish a session in an application layer with a communication apparatus that functions as a user apparatus in the mobile network;
a transmission unit configured to transmit network quality information of the mobile network to the communication apparatus in the session;
a reception unit configured to receive, from the communication apparatus, a request for Quality of Service (QoS) of a service desired to be used by the communication apparatus, the QoS having been decided based on the acquired network quality information and information related to the service; and
a network control unit configured to control the mobile network based on the QoS request.

19. A communication method executed by a communication apparatus that functions as a user apparatus in a mobile network including a core network, the communication method comprising:
establishing a session in an application layer with an information processing apparatus capable of controlling the mobile network via a function of the core network;
acquiring network quality information regarding the mobile network from the information processing apparatus in the session;
deciding Quality of Service (QoS) regarding a service desired to be used by the communication apparatus, based on the network quality information acquired and information related to the service; and
transmitting a request for the QoS to the information processing apparatus.

20. An information processing method executed by an information processing apparatus that is capable of controlling a mobile network including a core network via a function of the core network, the information processing method comprising:
establishing a session in an application layer with a communication apparatus that functions as a user apparatus in the mobile network;
transmitting network quality information of the mobile network to the communication apparatus in the session;
receiving, from the communication apparatus, a request for Quality of Service (QoS) of a service desired to be used by the communication apparatus, the QoS having been decided based on the acquired network quality information and information related to the service; and
controlling the mobile network based on the QoS request.
